(19) Europäisches Patentamt / European Patent Office / Office européen des brevets

(11) **EP 2 982 537 B1**

(12) **EUROPEAN PATENT SPECIFICATION**

(45) Date of publication and mention
of the grant of the patent:
**09.09.2020 Bulletin 2020/37**

(21) Application number: **13881056.9**

(22) Date of filing: **01.04.2013**

(51) Int Cl.:
*B60L 50/51* (2019.01)       *B60L 15/20* (2006.01)
*B60L 3/10* (2006.01)        *B60L 3/12* (2006.01)

(86) International application number:
**PCT/JP2013/059954**

(87) International publication number:
**WO 2014/162462 (09.10.2014 Gazette 2014/41)**

(54) **TRACTION CONTROL DEVICE AND TRACTION CONTROL METHOD**

ANTRIEBSREGELUNGSVORRICHTUNG UND ANTRIEBSREGELUNGSVERFAHREN

DISPOSITIF ET PROCÉDÉ DE COMMANDE DE TRACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.02.2016 Bulletin 2016/06**

(73) Proprietor: **Pioneer Corporation
Tokyo 113-0021 (JP)**

(72) Inventor: **KATO, Masahiro
Kawasaki-shi
Kanagawa 212-0031 (JP)**

(74) Representative: **Grünecker Patent- und
Rechtsanwälte
PartG mbB
Leopoldstraße 4
80802 München (DE)**

(56) References cited:
EP-A1- 2 161 157          WO-A1-02/00463
WO-A1-2012/111159     WO-A1-2012/121198
GB-A- 2 446 419          GB-A- 2 454 315
JP-A- 2007 209 068       JP-A- 2007 336 679
JP-A- 2008 062 687       JP-A- 2009 142 108
US-A1- 2009 210 128      US-B1- 6 199 650

**Description**

**TECHNICAL FIELD**

The present invention relates to a traction control device, to a traction control method and to a traction control program, and to a recording medium upon which that traction control program is recorded.

**BACKGROUND ART**

In recent years, from the standpoint of the burden upon the environment and so on, attention is being directed to electric automobiles of types that perform driving and braking with an electric motor according to the amount that an accelerator pedal or a brake pedal is stepped upon. Here, since the electric motor is an electrical component, accordingly the responsiveness and the linearity of driving and of braking for such an electric automobile are outstandingly excellent, as compared to those of an automobile equipped with an internal combustion engine for performing driving and braking by using both of the engine and a hydraulic braking mechanism.

This is because the response speed of an electric motor is around ten times faster than that of a hydraulic mechanism, and is around a hundred times faster than that of an internal combustion engine. Moreover, the relationship between the actual torque value $T_m$ generated by an electric motor and the value $I_m$ of the current to the motor (hereinafter also sometimes termed the "drive current value") is given by the following Equation (1):

$$T_m = K_t \cdot I_m \ \dots \ (1)$$

Here, the torque constant $K_1$ may be obtained in advance by measurement. Note that, depending on the type of the motor, the torque constant $K_1$ may be fixed or variable according to the motor current value $I_m$ or according to the rotational speed. Therefore, the actual torque value Tm is accurately ascertained by detecting the motor current value $I_m$ with a current sensor or the like during the operation of the electric motor. Moreover, the actual torque value $T_m$ is easily controlled by controlling the motor current value $I_m$. Due to this, techniques of various types have been proposed for an electric automobile in order to implement traction control whose levels of safety and of comfort are high as compared to that of an internal combustion engine or via control of brake hydraulic pressure.

As the first example of such a proposed technique, there is mentioned the technique for detecting the slip ratio $\lambda$ and the friction coefficient $\mu$ during vehicle travel, and for controlling the range over which the driving torque of the electric motor increases and decreases on the basis of the slip ratio $\lambda$ and the friction coefficient $\mu$ that have thus been detected (refer to Patent Document #1, hereinafter termed the "prior art 1"). With the technique of the prior art 1, the state of the road surface upon which the vehicle is traveling is ascertained by calculating the average value of the ratio of the friction coefficient $\mu$ to the slip ratio $\lambda$. And the increase or decrease of the driving torque is restricted, when the road surface is one upon which slippage can easily occur.

As the second example of the proposed technique, there is mentioned the technique to restrict the requested torque by performing (i) to obtain the slip ratio $\lambda$ and the friction coefficient $\mu$ during traveling by calculation; and (ii) to calculate a maximal driving torque on the basis of the maximal friction coefficient as estimated from the slip ratios $\lambda$ and the coefficients of friction $\mu$ thus calculated (refer to Patent Document #2, hereinafter termed the "prior art 2"). With the technique of the prior art 2, the maximal friction coefficient is estimated by selecting a $\mu$-$\lambda$ characteristic curve for the road surface upon which the vehicle is traveling on the basis of the correlation between the slip ratios $\lambda$ and the friction coefficients $\mu$ that have been calculated up until the present time point.

As the third example of a proposed technique, there is mentioned the technique for restricting the driving torque on the basis of the permitted maximal torque derived by performing: (i) estimation of the slip ratio $\lambda$ and the driving torque T during traveling; (ii) estimation of the friction coefficient $\mu$ on the basis of this slip ratio $\lambda$ and this driving torque T that have thus been estimated; and (iii) derivation of a permitted maximal torque for this friction coefficient $\mu$ that has thus been estimated and for the current load in the vertical direction sequentially (refer to Patent Document #3, hereinafter termed as the "prior art 3"). With the technique of the prior art 3, the permitted maximal torque is obtained by estimating the friction coefficient $\mu$ by referring to the first table that gives the relationship between the slip ratio $\lambda$ and the driving torque T, and the friction coefficient $\mu$, and by also referring to the second table that gives the relationship between the friction coefficient $\mu$ and the permitted maximal torque for each value of the load in the vertical direction.

Furthermore, Patent Document #4 discloses a slip rate estimating device measuring a slip ratio without the need for measuring body speed and a slip ratio control device using the slip ratio estimating device. Patent Document #5 discloses a torque distribution device for efficiently distributing torque over the motors of an electric vehicle, wherein slip rate of the drive wheels is calculated based on the vehicle speed and the drive wheel rotational speeds of each drive wheel.

**PRIOR ART DOCUMENTS**

**PATENT DOCUMENTS**

Patent Document #1: Japanese Laid-Open Patent Publication 2006-034012.
Patent Document #2: Japanese Laid-Open Patent Publication 2008-167624.
Patent Document #3: Japanese Laid-Open Patent Publication 2012-186928.
Patent Document #4: US 2009/210128 A1.
Patent Document #5: WO 2012/111159 A1.

**SUMMARY OF INVENTION**

**PROBLEMS TO BE SOLVED BY THE INVENTION**

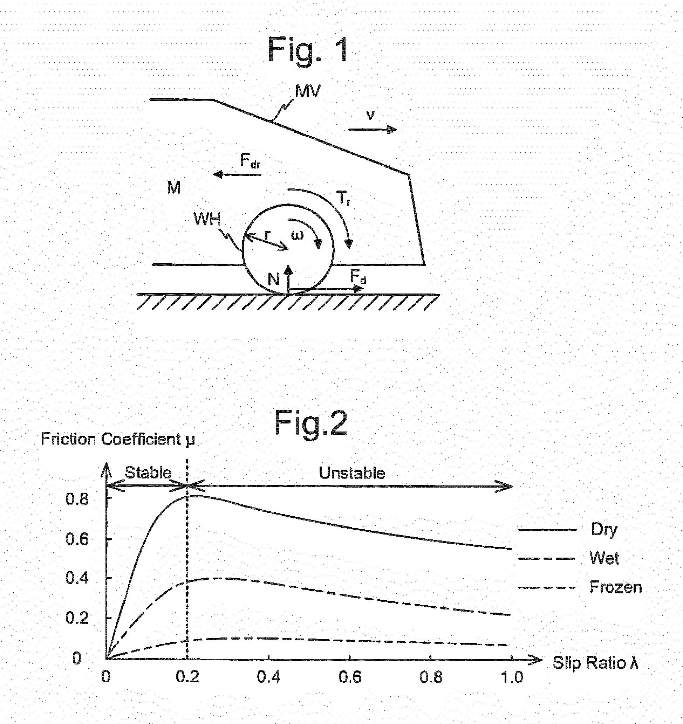

The motion of each of the driving wheels of a vehicle that is traveling upon a road surface can be expressed in terms of a single wheel model (hereinafter also sometimes termed a "driving wheel model").
The variables in the driving wheel model are shown in Fig. 1. In Fig. 1, "M" is the weight of the moving body, "$F_d$" is the driving force of the driving wheel WH, and "$F_{dr}$" is the traveling resistance. Moreover, "$T_m$" is the actual torque value that is generated by the motor and that is applied to the driving wheel WH, "v" is the speed at which the moving body MV is moving (hereinafter termed the "speed of the vehicle" or the
"vehicle speed"), and "$\omega$" is the rotational speed of the driving wheel WH. Furthermore, "N" is the normal reaction force acting upon the driving wheel WH, and "r" is the radius of the driving wheel WH.
In the driving wheel model shown in Fig. 1, the equation of motion of the moving body MV is given by the following Equation (2):

$$ M \cdot (dv/dt) = F_d - F_{dr} \ \dots \ (2) $$

Moreover, if the moment of inertia of the driving wheel WH is termed "$J_w$" and the driving torque is termed "$T_d$", then the equation of motion of the driving wheel WH is given by the following Equation (3):

$$ J_w \cdot (d\omega/dt) = T_m - r \cdot F_d = K_t \cdot I_m - T_d \ \dots \ (3) $$

If the friction coefficient of the driving wheel WH upon the road surface is termed $\mu$, then the relationship between the driving force $F_d$ and the normal reaction force N is given by the following Equation (4):

$$ \mu = F_d/N \ \dots \ (4) $$

Furthermore, in the driving wheel model described above, the slip ratio $\lambda$ is given by the following Equation (5):

$$ \lambda = (r \cdot \omega - v) \, / \, \mathrm{Max} \, (r \cdot \omega, \ v) \ \dots \ (5) $$

Here, Max(r·$\omega$, v) means the one of r·$\omega$ and v whose numerical value is the greater. During driving, Max(r·$\omega$, v) =r.$\omega$, because (r·$\omega$) is greater than v. On the other hand, during braking, Max(r·$\omega$, v) =v, because v is greater than (r·$\omega$).
In the driving wheel model, the relationship between the friction coefficient of $\mu$ and the slip ratio $\lambda$ (in other words, the $\mu$-$\lambda$ characteristic) during driving is generally as shown in Fig. 2. Note that, in Fig. 2, the $\mu$-$\lambda$ characteristic upon a dry road surface is shown by the solid line, that upon a wet road surface is shown by the single dashed broken line, and that upon a frozen road surface is shown by the double dashed broken line.
In the changes of the friction coefficient $\mu$ along with increase of the slip ratio during driving shown in Fig. 2, the moving body MV can travel in a stable manner, when the slip ratio is less than or equal to the slip ratio at which the friction coefficient $\mu$ becomes maximal (hereinafter, this will be termed a "stable state"). In contrast, the phenomenon of free spinning or the phenomenon of locking of the driving wheel WH can occur, when slip ratio is greater than the slip ratio at which the friction coefficient $\mu$ becomes maximal is a state in which (hereinafter this will be termed an "unstable state"). In the following, the region in which the state is stable will be termed the "stable region", while the region in which the state is unstable will be termed the "unstable region".

Note that, in changes of the friction coefficient $\mu$ along with increase of the slip ratio during braking, the stable state is that the slip ratio is greater than or equal to the slip ratio at which the friction coefficient $\mu$ becomes minimal. In contrast, the unstable state is that the slip ratio is less than the slip ratio at which the friction coefficient $\mu$ becomes minimal.

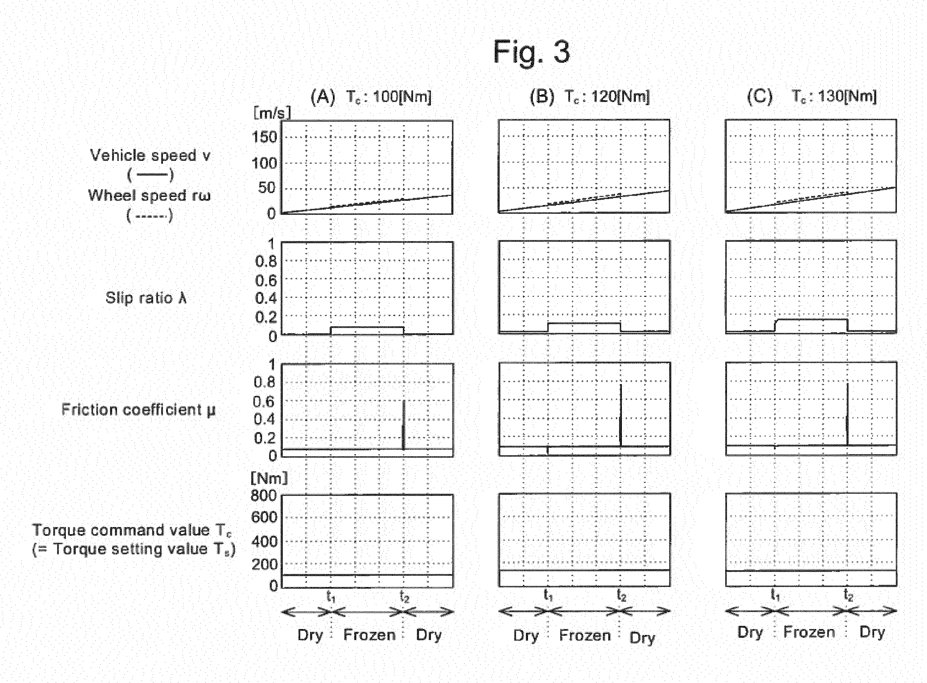

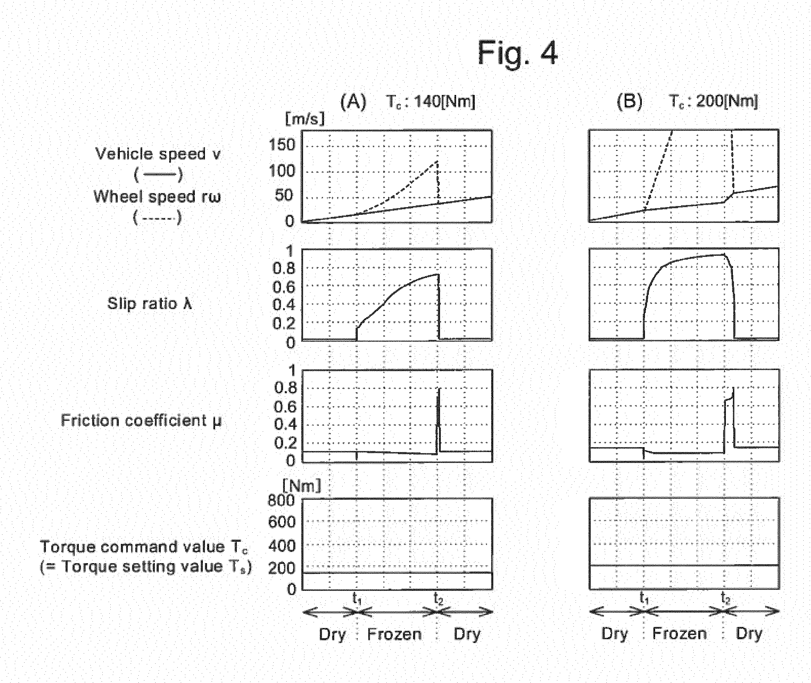

Cases will now be considered in which, in the case of a road surface having such types of $\mu$-$\lambda$ characteristic, a vehicle progresses from a dry road surface to a frozen road surface and then back to a dry road surface. In this type of case, the results of simulations when a torque command value $T_c$ that corresponds to the amount by which the accelerator pedal is stepped upon is inputted just as it is without modification to the motor drive system as a torque setting value $T_s$ are shown in Figs. 3 and 4. These Figs. 3 and 4 show the simulation results of the vehicle speed v, the wheel speed (r·ω), the slip ratio $\lambda$, and the friction coefficient $\mu$.

Note that the conditions employed for the above simulations were that: the electric automobile was a four wheel drive vehicle; its weight was 1800 [kg]; the moment of inertia of the driving wheel WH was 1.2 [kg·m$^2$]; and the torque response of the motor was 5 [ms] (the case of an in-wheel motor was assumed). Moreover, the simulations were performed under the assumption that the road surface changed from dry to frozen at the time point ti, and changed back from frozen to dry at the time point $t_2$ (>$t_1$).

As shown overall in Figs. 3 and 4, when the torque command value $T_c$ is used as the torque setting value $T_s$ just as it is without modification, then the slip ratio $\lambda$ upon the frozen road surface becomes greater along with increase of the torque setting value $T_s$ (=$T_c$). And, when the torque setting value Ts (=$T_c$) becomes greater than a specific value, then the slip ratio $\lambda$ increases. When the torque setting value $T_s$ becomes 0.2 or greater, the system enters unstable region shown in Fig. 2 described above, which is undesirable. This shows that, since the friction coefficient ($\mu$ is small on a frozen road surface, accordingly the gripping force is also low, and the system enters the unstable region when the torque setting value $T_s$ undesirably reaches a level that exceeds the gripping force.

In order to avoid the occurrence of this sort of situation in which the system undesirably enters into the unstable region, a method may be contemplated of limiting the torque setting value $T_s$ by performing some type of limitation processing upon the torque command value $T_c$. Methods of this type are employed in the techniques of the prior arts 1 to 3. In other words, the techniques the entire prior arts 1 to 3 are methods in which the torque setting value $T_s$ upon a frozen road surface is limited by controlling the torque setting value $T_s$ be variable according to the estimation result of the state of the road surface, i.e. the $\lambda$-$\mu$ characteristic, while upon a dry road surface the torque setting value $T_s$ is not limited more than necessary.

However, with the techniques of the prior arts 1 to 3, in order to estimate the $\lambda$-$\mu$ characteristic, averaging processing is performed (in the prior art 1), or estimation processing by the least-square method is performed (in the prior art 2), or table matching processing is performed (in the prior art 3). Therefore, it is necessary to employ a plurality type of data, accordingly a time period of at least around several seconds is required until appropriate limitation is imposed upon the torque setting value $T_s$. Due to this, it is impossible to impose appropriate limitation upon the torque setting value $T_s$ rapidly, when the state of the road surface has changed. As a result, it is difficult to say that it enable to ensure safety rapidly when a change from a dry road surface to a frozen road surface occurs abruptly, or to operate according to the intentions by the driver to be executed, when a change from a frozen road surface to a dry road surface occurs abruptly.

Accordingly, it may be considered to employ a technique in which limitation is applied to the torque setting value $T_s$ adaptively on the basis of the results of estimation of the slip ratio and the driving torque at the present time point; these results of estimation can be estimated from the vehicle movement speed v, the wheel rotational speed ω, and the motor current value $I_m$ whose current values can be detected quickly. Here, in order to apply limitation to the torque setting value $T_s$ in an appropriate manner, a precondition is that it enables to perform estimation of the current values of the slip ratio and the driving torque with good accuracy.

For quick estimation of the current values of slip ratio and driving torque with good accuracy, it is necessary to detect the current values of all of the movement speed v, the rotational speed ω, and the motor current value $I_m$ quickly and with good accuracy. However, it is not possible for such quick detection of the current values of all of the movement speed v, the rotational speed ω, and the motor current value $I_m$ to be performed with good accuracy during the entire period of vehicle travel.

Due to this, there is a requirement for a technique that can "appropriately" and "rapidly" impose an appropriate limitation upon the torque setting value $T_s$ according to the state of the road surface, even if the accuracy of estimation of the current values of the slip ratio and the driving torque cannot be said to be high. One of the problems to be solved is to respond to this requirement.

The present invention has been conceived in consideration of the circumstances described above, and its object is to provide a novel traction control device and a novel traction control method that, according to change of the state of the road surface, are capable of rapidly implementing appropriate control for stable traveling while still ensuring the required drive power.

## MEANS FOR SOLVING THE PROBLEMS

The invention comprises a traction control device for a moving body having a driving wheel that is driven by a motor according to Claim 1.

The invention further comprises a traction control method that is used by a traction control device for a moving body having a driving wheel that is driven by a motor according to Claim 7.

Moreover, the present invention comprises a traction control program according to Claim 8, wherein it causes a computer in a traction control device for a moving body having a driving wheel that is driven by a motor to execute a traction control method according to the present invention.

Furthermore, the present invention comprises a recording medium according to claim 9, wherein a traction control program according to the present invention is recorded thereupon in form that can be read by a computer in a traction control device for a moving body having a driving wheel that is driven by a motor.

## BRIEF DESCRIPTION OF THE DRAWINGS

Fig. 1 is a figure showing variables in a driving wheel model;
Fig. 2 is a figure showing relationships between the slip ratio and the friction coefficient during driving;
Fig. 3 is the first figure showing the results of simulations when traction control is not being performed;
Fig. 4 is the second figure showing the results of simulations when traction control is not being performed;
Fig. 5 is a schematic block diagram showing the configuration of a traction control device according to the first embodiment of the present invention;
Fig. 6 is a figure for explanation of estimated error ratios a and b;
Fig. 7 is a block diagram showing the configuration of a control part in the device shown in Fig. 5;
Fig. 8 is a block diagram showing the configuration of a limiting part in Fig. 7;
Fig. 9 is a figure for explanation of a relationship between slip ratio, driving torque, and a limit value (during driving);
Fig. 10 is the first figure showing the results of simulations of traction processing when no errors are present in the estimated slip ratio and in estimated driving torque;
Fig. 11 is the second figure showing the results of simulations of traction processing when no errors are present in the estimated slip ratio and in the estimated driving torque;
Fig. 12 is a figure showing the results of simulations of traction processing when errors are present in the estimated slip ratio and in the estimated driving torque;
Fig. 13 is a figure for explanation of the relationship between slip ratio, driving torque, and limit value corresponding to the simulation results shown in Fig. 12;
Fig. 14 is a figure for explanation of the relationship between slip ratio, driving torque, and limit value when a limiter coefficient is calculated on the basis of the estimated error ratios a and b;
Fig. 15 is a block diagram showing the configuration of a feedback part in Fig. 7;
Fig. 16 is the first figure showing the results of simulations of traction control by the traction control device of Fig. 5, when no errors are present in the estimated slip ratio and in the estimated driving torque;
Fig. 17 is the second figure showing the results of simulations of traction control by the traction control device shown in Fig. 5, when no errors are present in the estimated slip ratio and in the estimated driving torque;
Fig. 18 is a figure showing the results of simulations of traction control by the traction control device shown in Fig. 5, when errors are present in the estimated slip ratio and in the estimated driving torque;
Fig. 19 is the first figure showing the results of simulations of traction control when the relationship between a limiter coefficient and a feedback gain is as in the case of the first embodiment;
Fig. 20 is the second figure showing the results of simulations of traction control when the relationship between the limiter coefficient and the feedback gain is as in the case of the first embodiment;
Fig. 21 is a figure showing the results of simulations of traction control when the relationship between the limiter coefficient and the feedback gain is different from the case of the first embodiment;
Fig. 22 is a block diagram schematically showing the configuration of a traction control device according to the second embodiment of the present invention;
Fig. 23 is a block diagram showing the configuration of a control part in Fig. 22;
Fig. 24 is a block diagram showing the configuration of a control part of a modified embodiment;
Fig. 25 is a block diagram schematically showing the configuration of a traction control device according to an example of the present invention;

Fig. 26 is a block diagram for explanation of the configurations of a drive control part and a current detection part in a motor drive system in Fig. 25;

Fig. 27 is a flow chart for explanation of processing for traction control performed by the system shown in Fig. 25;

Fig. 28 is a flow chart for explanation of processing for calculation of a limit value corresponding to each of the driving wheels in Fig. 27; and

Fig. 29 is a flow chart for explanation of processing for calculation of a feedback torque value corresponding to each of the driving wheels in Fig. 27.

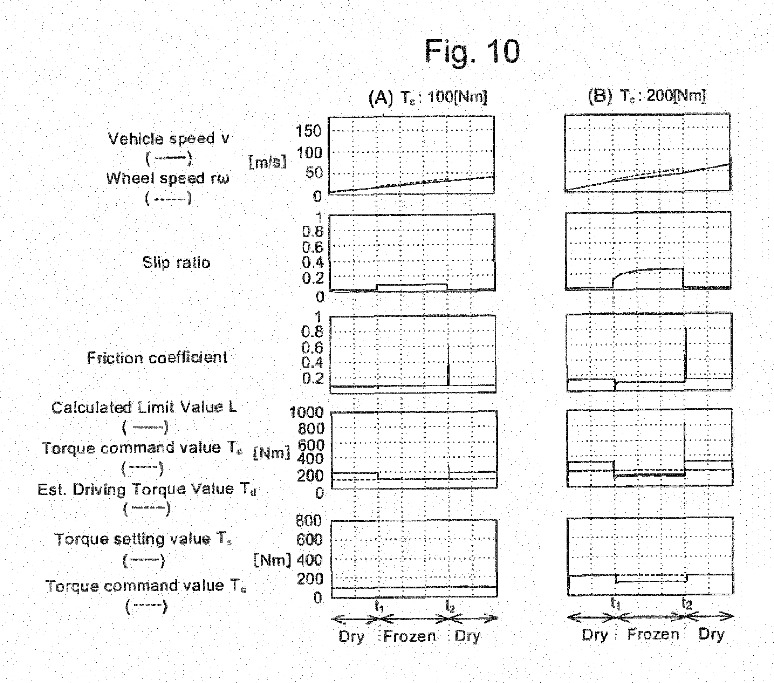

Note that the term "Est." in Figs. 10 through 12 and 16 through 21 means "Estimated".

REFERENCE SIGNS LIST

    100 ... traction control device
    110 ... control unit (movement speed acquisition part, rotational speed acquisition part, actual torque value acquisition part, limiting part, feedback part, torque setting value calculation part, and common torque setting value calculation part)
    700A, 700B ... traction control devices
    710 ... movement speed acquisition part
    720 ... rotational speed acquisition part
    730 ... actual torque value acquisition part
    741 ... limiting part
    742 ... feedback part
    743A, 743C ... torque setting value calculation parts
    762 ... slip ratio estimation part
    763 ... driving torque estimation part
    764 ... limit value calculation part
    765 ... limiter part
    782 ... common torque setting value calculation part

EMBODIMENT FOR CARRYING OUT THE INVENTION

In the following, embodiments of the present invention will be explained with reference to the appended drawings. Note that, in the following explanation and in the drawings, the same reference symbols are appended to elements that are the same or equivalent, and duplicated explanation is omitted.

[The first embodiment]

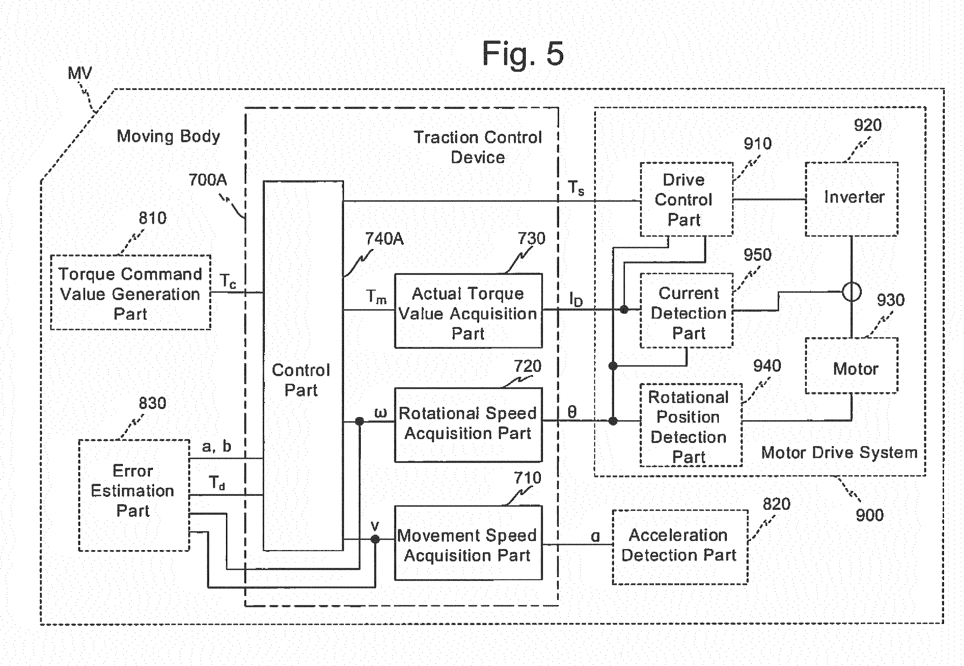

First, the first embodiment of the present invention will be explained with reference to Figs. 5 through 21.

<Configuration>

The placement and the configuration of a traction control device 700A according to the first embodiment are shown in Fig. 5 as a block diagram.

<Placement of the traction control device 700A>

As shown in Fig. 5, the traction control device 700A is arranged within the moving body MV. In addition to the traction control device 700A, a torque command value generation part 810, an acceleration detection part 820, an error estimation part 830, and a motor drive system 900 are provided within this moving body MV, and these parts are connected to the traction control device 700A.

The torque command value generation part 810 generates a torque command value $T_c$ on the basis of results being employed in generation of the torque command value $T_c$; these results are detected by an accelerator opening amount sensor, a braking amount sensor, a steering angle sensor and so on not shown in the figures. The torque command value $T_c$ that has been generated in this manner is sent to the traction control device 700A.

The acceleration detection part 820 detects the acceleration of the moving body MV in the direction of traveling.

The acceleration $\alpha$ that has been detected in this manner is sent to the traction control device 700A.

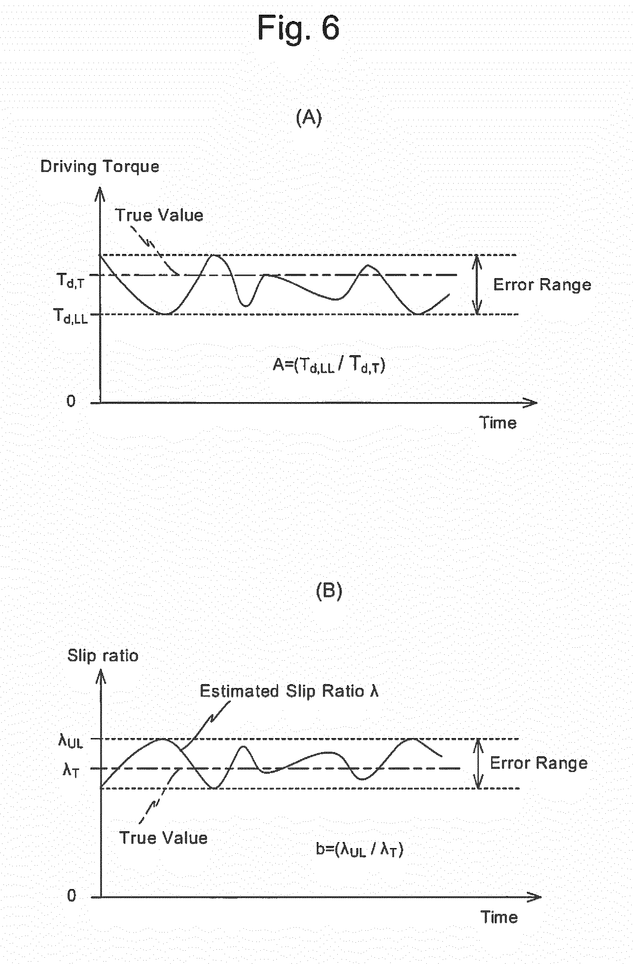

The error estimation part 830 estimates an error range of a slip ratio $\lambda$ estimated by the traction control device 700A (hereinafter, termed the "estimated slip ratio") and an error range of a driving torque $T_d$ estimated by the traction control device 700A (hereinafter, termed the "estimated driving torque"). And the error estimation part 830 calculates an estimated error ratio a (refer to Fig. 6(A)), which is the ratio of the lower limit value of the error range of the estimated driving torque $T_d$ with respect to the true value of the driving torque. Moreover, the error estimation part 830 calculates an estimated error ratio b (refer to Fig. 6(B)), which is the ratio of the upper limit value of the error range of the estimated slip ratio $\lambda$ with respect to the true value of the slip ratio. The estimated error ratios a and b that have been calculated in this manner are sent to the traction control device 700A.

Note that the calculation of the estimated error ratios a and b by the error estimation part 830 will be described hereinafter.

The motor drive system 900 comprises a drive control part 910, an inverter 920, and a motor 930. Moreover, the motor drive system 900 comprises a rotational position detection part 940 and a current detection part 950.

The drive control part 910 receives a torque setting value $T_s$ sent from the traction control device 700A. And the drive control part 910 calculates a drive voltage on the basis of this torque setting value $T_s$, the rotational position $\theta$ detected by the rotational position detection part 940, and the detected current value $I_D$ detected by the current detection part 950. For example, if the motor 930 is a three-phase motor, then the drive control part 910 calculates a three-phase voltage as the drive voltage. The drive voltage that has been calculated in this manner is sent to the inverter 920.

The inverter 920 receives the drive voltage sent from the drive control part 910. And the inverter 920 supplies current corresponding to the drive voltage to the motor 930. As a result, the motor 930 performs rotational motion on the basis of the torque setting value $T_s$, and rotates the driving wheel.

The rotational position detection part 940 includes a resolver or an encoder. The rotational position detection part 940 detects the rotational position $\theta$ of the motor 930. And the rotational position $\theta$ that has been detected in this manner is sent to the traction control device 700A, to the drive control part 910, and to the current detection part 950.

And the current detection part 950 detects the value of one or more currents flowing to the motor 930. For example, if the motor 930 is a three-phase motor, then the current detection part 950 detects the values of at least two among the three-phase currents flowing to the motor 930. The current value that has been detected in this manner is sent as a detected current value $I_D$ to the traction control device 700A and to the drive control part 910.

<<Calculation of the estimated error ratios a and b>>

Now, the calculation of the estimated error ratios a and b by the error estimation part 830 will be explained.

(Calculation of the estimated error ratio a)

The traveling resistance $F_{dr}$ is the sum total of the rolling resistance, the air resistance, and the gradient resistance. Thus, if there is no road gradient, the traveling resistance $F_{dr}$ is the sum of the rolling resistance and the air resistance.

The rolling resistance is represented by the following Equation (6):

$$\text{rolling resistance} = \mu_r \cdot M \cdot g \ \dots \ (6)$$

Here, $\mu r$ is the coefficient of rolling resistance, and g is the acceleration of gravity.

Moreover, the air resistance is represented by the following Equation (7):

$$\text{air resistance} = \rho \cdot C_d \cdot S \cdot v^2/2 \ \dots \ (7)$$

Here, $\rho$ is the air density, Cd is the coefficient of air resistance, and S is the projected frontal area.

According to the above, the rolling resistance does not depend upon the movement speed but is a constant, and the air resistance is proportional to the square of the speed. The result is that, if there is no road gradient, the traveling resistance $F_{dr}$ is given by the following Equation (8), where A and B are constants:

$$F_{dr} = A + B \cdot v^2 \ \dots \ (8)$$

Thus, when the vehicle is coasting onward under its own inertia without the driver stepping upon either the accelerator pedal or the brake pedal, during the inertial coasting travel, it enables to estimate the constants A and B by the least-square method on the basis of relationship between the change of the traveling resistance $F_{dr}$ and the change of the movement speed v; the relation is given by Equation (2). Note that the wheel speed of the driving wheel (=r·ω) is employed as the movement speed when estimating the constants A and B, because no slippage is generated during inertial coasting travel caused by the driving wheels being neither driven nor braked.

After the constants A and B have been estimated in this manner, pseudo engine braking with a weak braking torque is performed for either the front wheels or the rear wheels of a four wheel drive vehicle, for example. And the rotational speed of a driving wheel to which no braking torque is applied (=r·ω) is taken as being the speed v of the vehicle, and the traveling resistance $F_{dr}$ is calculated by using Equation (8). Subsequently, the true value of the driving torque (=r·$F_d$) is calculated after having calculated the driving force $F_d$ by using the relationship of Equation (2).

The error estimation part 830 calculates the true value of the driving torque according to the method described above. Subsequently, the error estimation part 830 compares the true value of the driving torque with the estimated driving torque $T_d$ estimated by the traction control device 700A that uses the relationship of Equation (3), and obtains an error range for the estimated driving torque $T_d$; and, the error estimation part 830 estimates the range of the error range of the estimated driving torque $T_d$, then calculates the estimated error ratio a.

(Calculation of the estimated error ratio b)

When the driver does not step upon either the accelerator pedal or the brake pedal while the electric automobile is traveling, it is usual either to perform inertial traveling or to perform control by applying pseudo engine braking with a weak braking torque. Thus, supposing that this automobile has four driving wheels, by performing setting while pseudo engine braking is being applied so that no braking torque is applied to either the front wheels or the rear wheels, it enables to calculate the true value of the movement speed (=r.ω) of the vehicle from the wheel speed of this driving wheel to which no braking torque is applied.

The error estimation part 830 calculates the true value of the movement speed by the method described above. Subsequently, the error estimation part 830 compares the true value of the movement speed with the movement speed v that has been acquired by time integration of the acceleration α in the traction control device 700A, and specifies the error range of the movement speed v; and then the error estimation part 830 calculates the estimated error ratio b, after having estimated the range of the estimated error of the estimated slip ratio λ on the basis of the error range of the movement speed.

The estimated error ratios a and b can be calculated by the method described above, when neither the accelerator pedal nor the brake pedal is being stepped upon while the vehicle is traveling upon a level road. Although, having obtained these estimated error ratios a and b once, there is no need to calculate them again repeatedly, nevertheless, the higher the frequency of calculation can be, the better is it possible to respond to changes of these error ratios over time.

<Configuration of the traction control device 700A>

As shown in Fig. 5, the traction control device 700A comprises a movement speed acquisition part 710, a rotational speed acquisition part 720, an actual torque value acquisition part 730, and a control part 740A.

The movement speed acquisition part 710 receives the acceleration α sent from the acceleration detection part 820. And the movement speed acquisition part 710 performs time integration of the acceleration α, and thereby acquires the speed of movement v. The movement speed that has been acquired in this manner is sent to the control part 740A and to the error estimation part 830.

The rotational speed acquisition part 720 receives the rotational position θ sent from the rotational position detection part 940. And the rotational speed acquisition part 720 performs time differentiation of the rotational position θ, and thereby acquires the rotational speed ω. The rotational speed ω that has been acquired in this manner is sent to the control part 740A and to the error estimation part 830.

The actual torque value acquisition part 730 receives the detected current value $I_D$ sent from the current detection part 950. And next the actual torque value acquisition part 730 calculates the motor current value Im on the basis of this detected current value $I_D$. Note that the motor current value $I_m$ represents the absolute magnitude of the detected current value $I_D$, in other words $I_m = |I_D|$.

Next, the actual torque value acquisition part 730 acquires the actual torque value $T_m$ by calculating the actual torque value $T_m$ by using Equation (1). The actual torque value $T_m$ that has been acquired in this manner is sent to the control part 740A.

The control part 740A receives the torque command value $T_c$ sent from the torque command value generation part 810 and the estimated error ratios a and b sent from the error estimation part 830. Subsequently, the control part 740A performs torque control upon the torque command value $T_c$ on the basis of the speed of movement v, the rotational

speed $\omega$, and the actual torque value $T_m$, and thereby calculates the torque setting value $T_s$. And the control part 740A sends this torque setting value $T_s$ that has thus been calculated to the drive control part 910.

Note that, if no command is issued to the effect that traction control should be performed, then the torque control part 740A is adapted to send the torque command value $T_c$ to the drive control part 910 as the torque setting value $T_s$.

Moreover, the control part 740A sends the estimated driving torque $T_d$ to the error estimation part 830. Note that the control part 740A performs the calculation of the estimated driving torque $T_d$ and sends the estimated driving torque $T_d$ that has thus been calculated to the error estimation part 830, irrespective of whether or not any command has been issued to the effect that traction control should be performed.

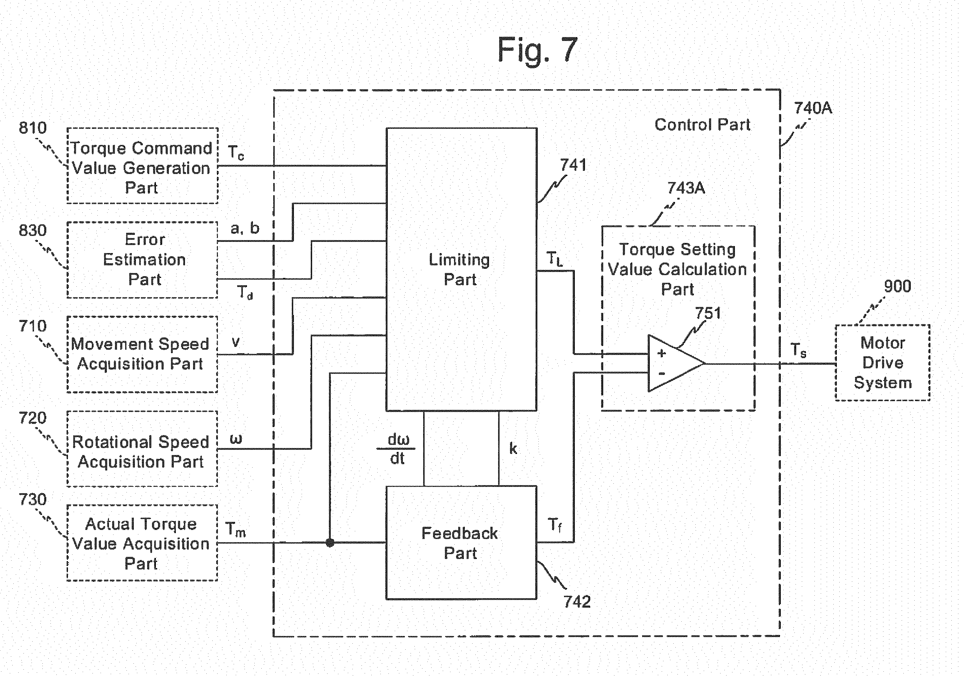

As shown in Fig. 7, the control part 740A having the function described above comprises a limiting part 741 and a feedback part 742. Moreover, the control part 740A comprises a torque setting value calculation part 743A.

The limiting part 741 receives the torque command value $T_c$ sent from the torque command value generation part 810 and the estimated error ratios a and b sent from the error estimation part 830. And the limiting part 741 performs limitation control upon the torque command value $T_c$ on the basis of the speed of movement v, the rotational speed $\omega$, and the actual torque value $T_m$, and thereby calculates a limited torque value $T_L$. And the limiting part 741 sends this limited torque value $T_L$ that has thus been calculated to the torque setting value calculation part 743A.

Note that, if no command is issued to the effect that traction control should be performed, then the limiting part 741 sends the torque command value $T_c$ to the torque setting value calculation part 743A as the limited torque value $T_L$.

Moreover, the limiting part 741 sends a limiter coefficient k that has been calculated at an intermediate stage of the calculation of the limited torque value $T_L$ and the differential value (d$\omega$/dt) the of the rotational speed $\omega$ with respect to time to the feedback part 742. Furthermore, the limiting part 741 sends the estimated driving torque $T_d$ that has been calculated at an intermediate stage of the calculation of the limited torque value $T_L$ to the error estimation part 830.

Note that the limiting part 741 performs the calculation of the estimated driving torque $T_d$ and sends the estimated driving torque $T_d$ that has thus been calculated to the error estimation part 830, irrespective of whether or not any command has been issued to the effect that traction control should be performed.

The details of the configuration of the limiting part 741 having the above described functions will be described hereinafter.

The feedback part 742 receives the limiter coefficient k and the time differentiated value (d$\omega$/dt) of the rotational speed $\omega$ sent from the limiting part 741, and the actual torque value $T_m$ sent from the actual torque value acquisition part 730. And, on the basis of the limiter coefficient k, the time differentiated value (d$\omega$/dt), and the actual torque value $T_m$, the feedback part 742 calculates a feedback torque value Tr. And the feedback part 742 sends the feedback torque value Tr that has thus been calculated to the torque setting value calculation part 743A. Note that, if no command to the effect that traction control is to be performed has been issued, then the feedback part 742 sends "0 [Nm]" to the torque setting value calculation part 743A as the feedback torque value Tr.

Note that the details of the configuration of the feedback part 742 will be described hereinafter.

The torque setting value calculation part 743A has a configuration that includes a subtraction part 751. The torque setting value calculation part 743A receives the limited torque value $T_L$ sent from the limiting part 741 and the feedback torque value $T_f$ sent from the feedback part 742. And, the torque setting value calculation part 743A calculates a torque setting value $T_s$ according to the following Equation (9), and sends the calculated torque setting value $T_s$ to the motor drive system 900.

$$T_s = T_L - T_f \ \dots \ (9)$$

<<Configuration of the limiting part 741>>

Next, the configuration of the limiting part 741 will be explained.

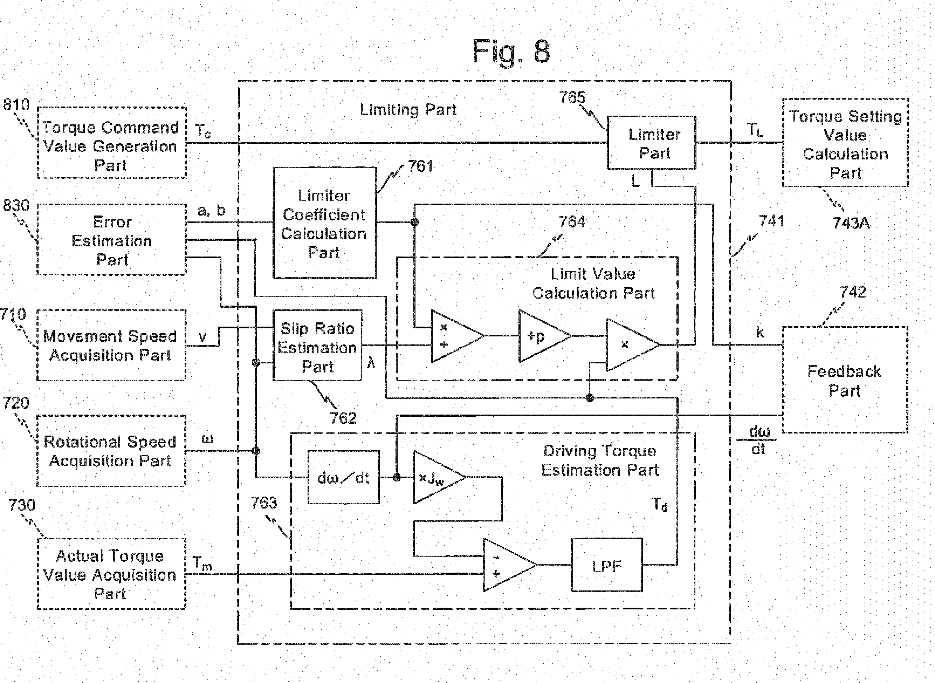

As shown in Fig. 8, the limiting part 741 comprises a limiter coefficient calculation part 761, a slip ratio estimation part 762, and a driving torque estimation part 763. Moreover, the limiting part 741 comprises a limit value calculation part 764 and a limiter part 765.

The limiter coefficient calculation part 761 receives the estimated error ratios a and b sent from the error estimation part 830. And the limiter coefficient calculation part 761 calculates a limiter coefficient k on the basis of the estimated error ratios a and b. The limiter coefficient k that has been calculated in this manner is sent to the limit value calculation part 764 and to the feedback part 742.

Note that the processing performed by the limiter coefficient calculation part 761 for calculating the limiter coefficient k will be described hereinafter.

The slip ratio estimation part 762 receives the movement speed v sent from the movement speed acquisition part 710 and the rotational speed $\omega$ sent from the rotational speed acquisition part 720. And the slip ratio estimation part 762 performs slip ratio estimation by calculating the estimated slip ratio $\lambda$ according to Equation (5) described above.

The estimated slip ratio $\lambda$ that has been calculated in this manner is sent to the limit value calculation part 764.

The driving torque estimation part 763 receives the rotational speed $\omega$ sent from the rotational speed acquisition part 720 and the actual torque value $T_m$ sent from the actual torque value acquisition part 730. Subsequently, the driving torque estimation part 763 performs driving torque estimation by calculating the estimated driving torque $T_d$ by passing the value obtained according to the following Equation (10), which is a variant of Equation (3) described above, through a low pass filter (LPF):

$$T_d = T_m - J_w \cdot (d\omega/dt) \; ... \; (10)$$

The estimated driving torque $T_d$ that has been calculated in this manner is sent to the limit value calculation part 764 and to the error estimation part 830.

Furthermore, the driving torque estimation part 763 sends the time differentiated value (dw/dt) of the rotational speed $\omega$ calculated at an intermediate stage in the calculation of the estimated driving torque $T_d$ according to Equation (10) to the feedback part 742.

The limit value calculation part 764 receives the estimated slip ratio $\lambda$ sent from the slip ratio estimation part 762 and the estimated driving torque $T_d$ sent from the driving torque estimation part 763. Moreover, the limit value calculation part 764 receives the limiter coefficient k sent from the limiter coefficient calculation part 761. And the limit value calculation part 764 calculates the limit value L on the basis of the limiter coefficient k, the estimated slip ratio $\lambda$, and the estimated driving torque $T_d$. The limit value L that has been calculated in this manner is sent to the limiter part 765.

Note that, in the first embodiment, the limit value L is calculated according to the following Equation (11):

$$L = T_d \cdot (p + k/\lambda) \; ... \; (11)$$

Here, the constant p is determined in advance according to experiment, simulation or the like from the standpoint of performing appropriate traction control.

The limiter part 765 receives the torque command value $T_c$ sent from the torque command value generation part 810. And the limiter part 765 performs limitation control upon the torque command value $T_c$ according to the limit value L sent from the limit value calculation part 764, and calculates a limited torque value $T_L$.

During this limitation control, if no command to the effect that traction control is to be performed has been issued, and if also the torque command value $T_c$ is less than or equal to the limit value L, then the limiter part 765 takes the torque command value $T_c$ as the limited torque value $T_L$. Moreover, if a command to the effect that traction control is to be performed has been issued, and moreover the torque command value $T_c$ is greater than the limit value L, then the limiter part 765 takes the limit value L as the limited torque value $T_L$. The limited torque value $T_L$ that has been calculated in this manner is sent to the torque setting value calculation part 743A.

(Processing for calculation of the limiter coefficient)

Now, the processing performed by the limiter coefficient calculation part 761 described above for calculation of the limiter coefficient k will be explained.

((Relationship between the phenomenon of slipping of the moving body and the driving torque))

First, the relationship between the phenomenon of slipping of the moving body and the driving torque will be explained.

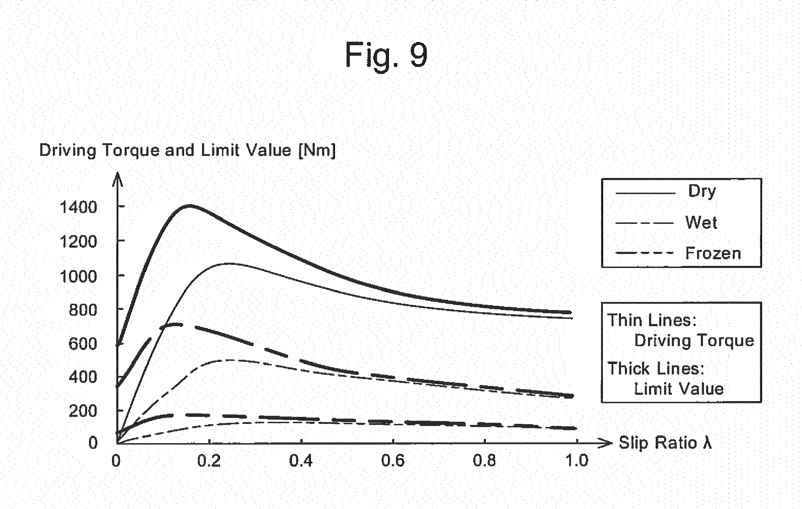

The relationship "$T_d = r \cdot Fd = R \cdot \mu \cdot N$" is established by Equations (3) and (4) described above. Due to this, if there are no changes in the radius r of the driving wheel and in the normal reaction force N, then, as shown by the thin lines in Fig. 9, the slip ratio and the driving torque are in the same relationship as the slip ratio and the friction coefficient in Fig. 2. As will be understood from Equation (3), the rotational speed $\omega$ increases when the actual torque value $T_m$ is larger as compared to the value of the current driving torque $T_d$ during traveling, and the slip ratio given Equation (5) also increases.

In this type of case, different operations take place, depending upon the value of the slip ratio. If the slip ratio is less than or equal to "0.2", then, as shown in Fig. 9, the driving force $F_d$ increases, since the driving torque also increases. By this, if the change of $F_{dr}$ due to air resistance and so on is small, then the speed of movement v also increases, as shown by Equation (2). Accordingly it enables to travel in a stable manner, since the increase of the slip ratio given by Equation (5) is mitigated. On the other hand, if the slip ratio is greater than "0.2", then, as shown in Fig. 9, then the driving torque does not increase. Thereby, the driving force $F_d$ also does not increase, and the movement speed v given by Equation (2) also does not increase. As a result, the increase of the slip ratio shown by Equation (5) progresses, which is not desirable, and accordingly traveling becomes unstable, since the slip ratio becomes yet greater.

Which of these operations actually takes place is determined by the relationship between the maximal value of the driving torque and the actual torque value $T_m$. If the actual torque value $T_m$ is sufficiently smaller than the maximal value of the driving torque with room to spare, then it is possible to maintain stable travel. On the other hand, if the actual torque value $T_m$ has become greater than the maximal value of the driving torque, then the system enters the unstable region, which is undesirable.

An example of the calculation of the limit value L by using Equation (11) is shown in Fig. 9. If the limited torque value $T_L$ with which limitation processing is performed upon the torque command value $T_c$ according to the limit value L is taken as being the torque setting value $T_s$, then, the larger the slip ratio $\lambda$ is, the closer the limit value L is set to the driving torque, and, conversely, the smaller the slip ratio $\lambda$ is, the limit value L can be set to the more removed from the driving torque.

Accordingly, the torque setting value $T_s$ is limited to a value that is closer to the current driving torque $T_d$, the greater the slip ratio $\lambda$ is. Moreover, since the torque limitation becomes weaker the smaller the slip ratio $\lambda$ is, accordingly a larger margin for the torque setting value $T_s$ to exceed the current driving torque $T_d$ is permitted.

Note that, since the limit value L is closer to the estimated driving torque Td the larger the estimated slip ratio $\lambda$ is, accordingly it is desirable for the constant p to be set to a value that is close to "I". Accordingly, in the first embodiment, "I" is employed as the constant p, so that the limit value L is calculated according to the following Equation (12):

$$L = T_d \cdot (1 + k/\lambda) \ldots (12)$$

Moreover since, the smaller the limiter coefficient k is set, the stronger a limitation can be imposed, accordingly a stronger torque limitation is imposed when the estimated slip ratio $\lambda$ becomes large, and as a result it enables to suppress increase of the slip ratio. However, it is not desirable to set the limiter coefficient k to be too small, because it is not desirable to impose more torque limitation than necessary, if the estimated slip ratio $\lambda$ is within the stable region.

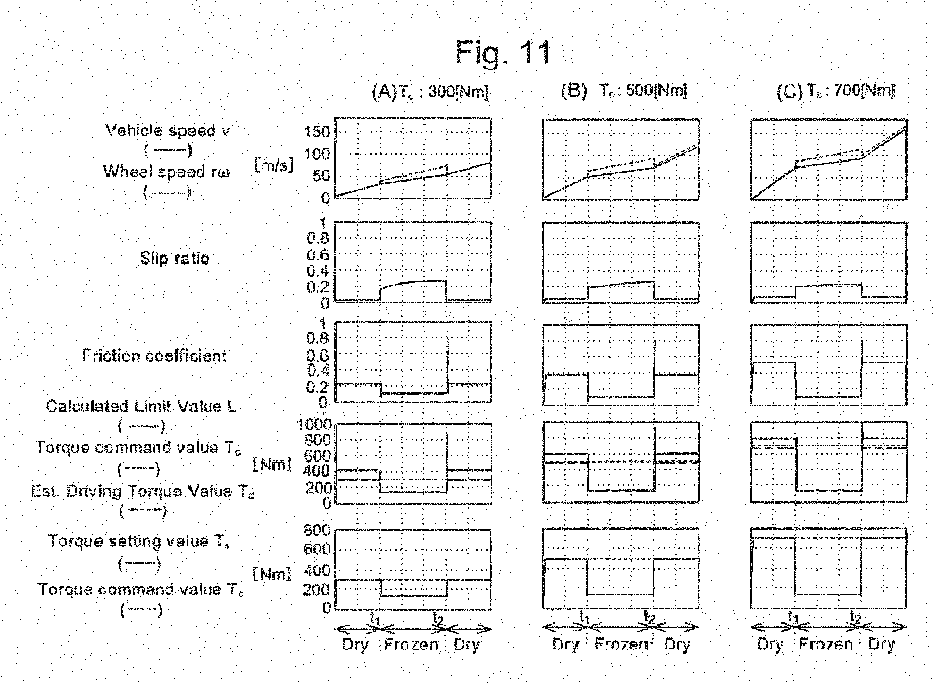

The results of simulations of anti-slip performance during driving are shown in Figs. 10 and 11, in cases when the limited torque value $T_L$ is taken as the torque setting value $T_s$ when the limiter coefficient k in Equation (12) is set to "0.01". Note that as conditions for these simulations, in a similar manner to the case of the simulations when the limitation control described above was not performed, the conditions were employed that: the electric automobile was a four wheel drive vehicle; its weight was 1800 [kg]; the moment of inertia of the driving wheel WH was 1.2 [kg·m$^2$] ; and the torque response of the motor was 5 [ms]. Moreover, the simulations were performed under the assumption that the road surface changed from dry to frozen at the time point $t_1$, and changed back from frozen to dry at the time point $t_2$ (>$t_1$).

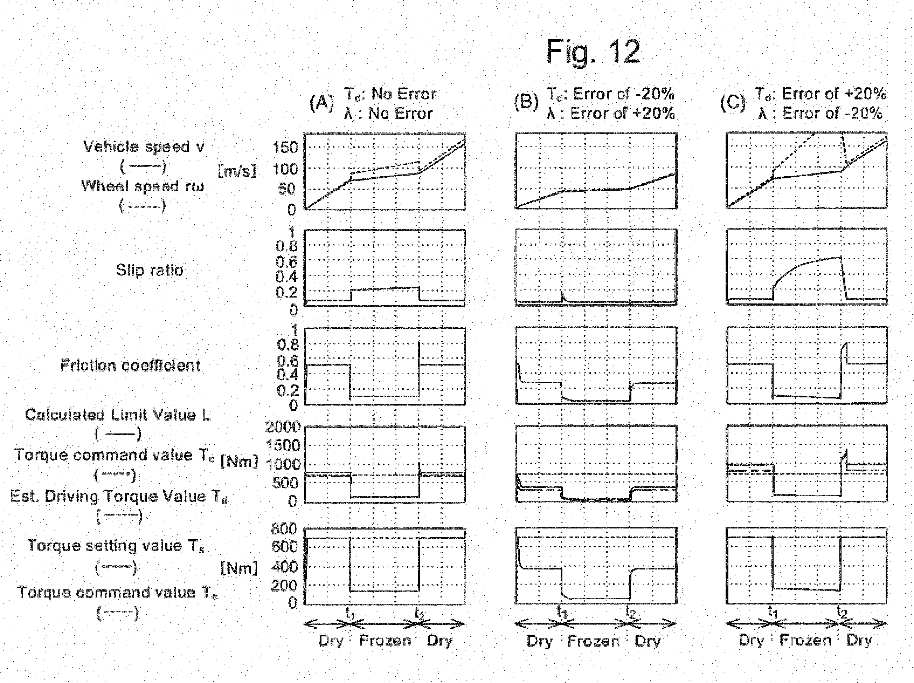

Note that in Figs. 10 and 11 (and the same holds for Figs. 12 and 16 through 21 that will be described hereinafter), as the results of simulations of when limitation control is not performed, in addition to the vehicle speed v, the wheel speed (r·ω), the slip ratio, and the friction coefficient shown in Figs. 3 and 4, the results of simulations are also shown for the limit value L, the estimated driving torque $T_d$, the torque setting value $T_s$, and the limited torque value $T_L$ that are calculated. Thus, these are figures in which comparisons for the limit value L (called the "calculated limit value L" in Figs. 10 through 12 and Figs. 16 through 21), the torque setting value $T_s$, and the limited torque value $T_L$ that are calculated with the torque command value $T_c$ become simple and easy.

As shown overall in Figs. 10 and 11, since the limit value L on a dry road surface is greater than the torque command value $T_c$, accordingly the torque setting value $T_s$ is not limited. When the vehicle enters upon a frozen road surface, the torque setting value $T_s$ instantaneously becomes limited by the limit value L, because the limit value L decreases to below the torque setting value $T_s$. As a result, it enables to confirm that increase of the slip ratio $\lambda$ can be suppressed. In other words, it may be confirmed that it is possible for sufficient acceleration upon a dry road surface, and also travel upon a frozen road surface with slippage being prevented, to be compatible.

(Influence of the estimated errors in the slip ratio and the driving torque)

Next, the influence of the estimated errors in the slip ratio $\lambda$ and the driving torque $T_d$ upon the anti-slip performance will be explained.

The results of simulations are shown in Fig. 12, when errors are included in the estimated slip ratio $\lambda$ and in the estimated driving torque $T_d$, along with comparison examples for the case when the errors are not present. Note that the conditions for these simulations were the same as in the case of Fig. 11(C) described above.

As shown in Fig. 12, when errors are included in the estimated slip ratio $\lambda$ and in the estimated driving torque $T_d$, the torque setting value $T_s$ may be reduced even if limitation control is performed upon a dry road surface, and/or suppression of increase of the slip ratio upon a frozen road surface may not be sufficient. Accordingly, it was understood that the performance for traction control was undesirably deteriorated when the estimated errors in the estimated slip

ratio $\lambda$ and in the estimated driving torque $T_d$ were large.

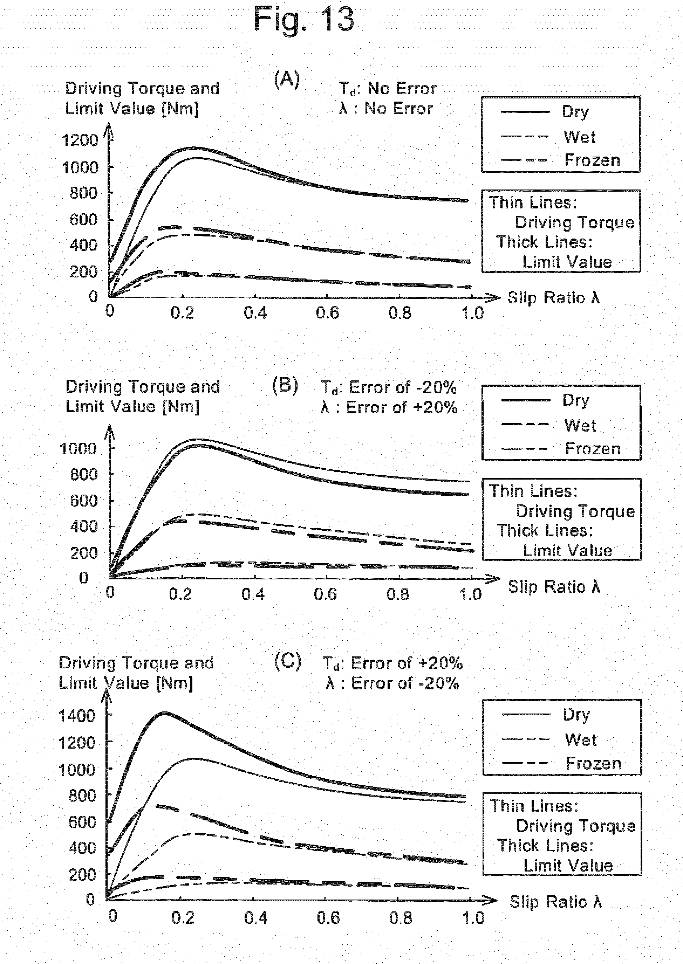

By contrast, the results of calculation of the limit value L when errors are included in the estimated slip ratio $\lambda$ and in the estimated driving torque $T_d$ using the calculation of the limit value L are shown in Fig. 13, along with comparison examples when no errors are present. If, using the calculation of the limit value L, errors are included in the estimated slip ratio $\lambda$ and/or in the estimated driving torque $T_d$, then, as shown in Fig. 13(B), in some cases the necessary driving torque is not obtained, since limitation is performed with a limit value that is smaller than the driving torque. Moreover, as shown in Fig. 13(C), on a slippery road surface the reduction of torque becomes insufficient, which is undesirable, because limitation of the driving torque is performed with a limit value that is too loose. The occurrence of this phenomenon also can be seen in the simulation results shown in Fig. 12 and described above.

(Calculation of the limiter coefficient)

In the first embodiment, in consideration of the influence of the estimated errors in the estimated slip ratio $\lambda$ and in the estimated driving torque $T_d$, the limiter coefficient calculation part 761 calculates the limiter coefficient k according to the estimated errors in the estimated slip ratio $\lambda$ and the estimated driving torque $T_d$.

During this calculation of the limiter coefficient k, the limiter coefficient calculation part 761 acquires the estimated error ratios a and b sent from the error estimation part 830. If these estimated error ratios a and b are present, then the limit value L is calculated according to the following Equation (13):

$$L = a \cdot T_d \cdot (1 + k/(b \cdot \lambda)) \dots (13)$$

In Equation (13), the limit value L including errors is calculated by taking the estimated slip ratio $\lambda$ as b times the true value of the slip ratio, and the estimated driving torque $T_d$ as a times the true value of the driving torque.

If the limiter coefficient when there are no errors in the estimated slip ratio $\lambda$ and in the estimated driving torque $T_d$ is written as "k*", then the condition that Equation (13) should be the same as Equation (12) described above becomes as shown in the following Equation (14):

$$a \cdot T_d \cdot (1 + k/(b \cdot \lambda)) = T_d \cdot (1 + k^*/\lambda) \dots (14)$$

The result when the limiter coefficient k is obtained from Equation (14) is given by the following Equation (15):

$$k = k^* \cdot (b/a) + \lambda \cdot ((b/a) - b) \dots (15)$$

Here, if there are no estimated errors in the estimated slip ratio $\lambda$ and the estimated driving torque $T_d$, "0.01" is an adequate value for the limiter coefficient k*, as shown by the simulation results in Figs. 10 and 11 described above,. Moreover, with regard to the slip ratio, as shown in Fig. 2 described above, "0.2" is the boundary between the stable region and the unstable region (in other words, the slip ratio at which the friction coefficient becomes maximal). Accordingly, in the first embodiment, the limiter coefficient calculation part 761 is adapted to calculate the limiter coefficient which it supplies to the limit value calculation part 764 according to the following Equation (16):

$$k = 0.01 \cdot (b/a) + 0.2 \cdot ((b/a) - b) \dots (16)$$

Note that Equation (16) is obtained by substituting k*=0.01 and $\lambda$=0.2 into Equation (15).

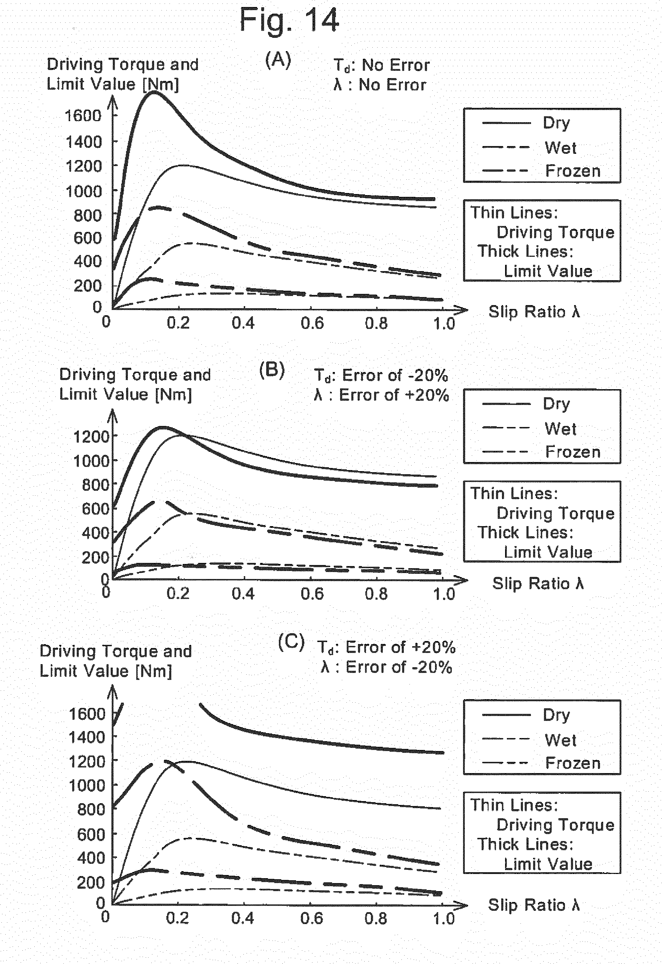

Examples with limit values L calculated according to Equation (12) are shown in Fig. 14, when the limiter coefficient k calculated according to the Equation (16) is employed. As shown in Fig. 14(B), the difference from the case of Fig. 13(B) is that, when the slip ratio is less than or equal to "0.2", the limit value L does not become too small, so that stronger limitation than required is not imposed. In other words, even if some estimated errors are included in the estimated slip ratio $\lambda$ and/or in the estimated driving torque $T_d$, it enables to avoid stronger limitation than required being imposed in the stable region.

Note that, in the case of Fig. 14(C) in which the direction of the error is opposite from the case shown in Fig. 14(B), undesirably weak limitation is imposed. However, it is arranged to overcome this problem by using, together in parallel, both the adaptive limitation processing performed by the limiting part 741 and feedback processing performed by the feedback part 742 as will be described hereinafter.

<<Configuration of the feedback part 742>>

Next, the configuration of the feedback part 742 will be explained.

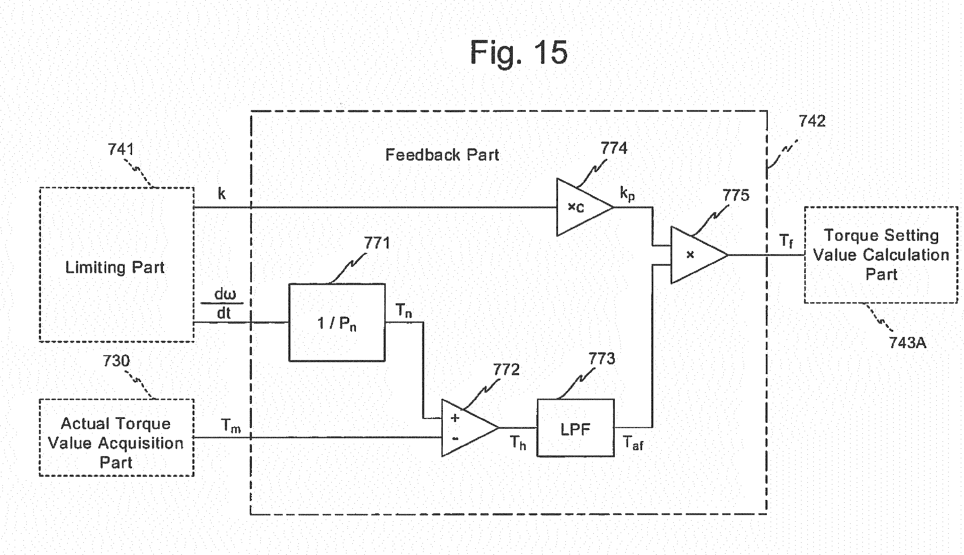

As shown in Fig. 15, the feedback part 742 comprises an adhesive model part 771, a subtraction part 772, and a low pass filter part (LPF) 773. Moreover, the feedback part 742 comprises a feedback gain calculation part 774 and a multiplication part 775.

The adhesive model part 771 can be described as a transfer function given by "$P_n{}^{-1}=J_W+M\cdot r^2$". The adhesive model part 771 receives the time differentiated value ($d\omega/dt$) of the rotational speed $\omega$ sent from the limiting part 741. And, according to the following Equation (17), the adhesive model part 771 calculates a torque value $T_n$ corresponding to the time differentiated value ($d\omega/dt$) according to an adhesive model, which is a virtual model in which slipping of the driving wheel does not occur, and sends the torque value $T_n$ that has thus been calculated to the subtraction part 772.

$$T_n = P_n{}^{-1} \cdot (d\omega/dt) \; ... \; (17)$$

Note that in the following the torque value $T_n$ is also sometimes termed the "back-calculated torque value $T_n$", because the torque value $T_n$ is back-calculated from the rotational speed $\omega$ by employing the adhesive model.

The subtraction part 772 receives the back-calculated torque value $T_n$ sent from the adhesive model part 771 and the actual torque value $T_m$ sent from the actual torque acquisition part 730. And the subtraction part 772 calculates a differential torque value $T_h$ according to the following Equation (18), and sends the differential torque value $T_h$ that has thus been calculated to the LPF part 773.

$$T_h = T_n - T_m \; ... \; (18)$$

The LPF part 773 receives this differential torque value $T_h$ sent from the subtraction part 772. And the LPF part 773 performs filtering processing upon the differential torque value $T_h$, calculates the after-filtering torque value $T_{af}$, and sends the after-filtering torque value $T_{af}$ that has thus been calculated to the multiplication part 775.

The feedback gain calculation part 774 receives the limiter coefficient k sent from the limiting part 741. And, using a constant c that is predetermined, the feedback gain calculation part 774 calculates a feedback gain $k_p$ according to the following Equation (19), and sends the feedback gain $k_p$ that has thus been calculated to the multiplication part 775.

$$k_p = c \cdot k \; ... \; (19)$$

Note that the constant c will be described hereinafter.

The multiplication part 775 receives the after-filtering torque value $T_{af}$ sent from the LPF part 773 and the feedback gain $k_p$ sent from the feedback gain calculation part 774. And the multiplication part 775 calculates the feedback torque value $T_f$ according to the following Equation (20), and sends the feedback torque value Tr that has thus been calculated to the torque setting value calculation part 743A.

$$T_f = k_p \cdot T_{af} \; ... \; (20)$$

(About the constant c)

Now, the constant c that is utilized during the calculation of the feedback gain $k_p$ by the feedback gain calculation part 774 will be explained.

In the first embodiment, as described above, the feedback gain $k_p$ corresponding to the value of the limiter coefficient k calculated by the limiting part 741 is calculated by Equation (19) above. Due to this, if the limiter coefficient k is small and the limitation is strong, then the feedback gain $k_p$ is small and the feedback control becomes weak. On the other hand, if the limiter coefficient k is large and the limitation is weak, then the feedback gain $k_p$ is large and the feedback control becomes strong.

As the result of investigation as to how to obtain an appropriate torque setting value via these two types of torque reduction, via i.e. torque reduction by adaptive limitation control by the limiting part 741 and via torque reduction by model tracking control utilizing the feedback part 742, it has been discovered that it is optimum to take the constant c as being "10", thus calculating the feedback gain $k_p$ according to the following Equation (21):

$$k_p = 10 \cdot k \dots (21)$$

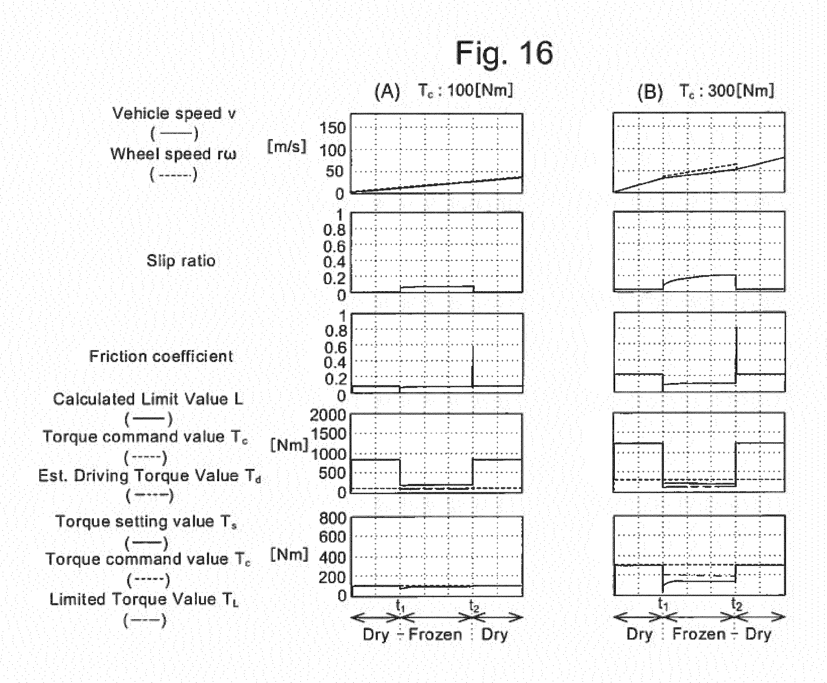

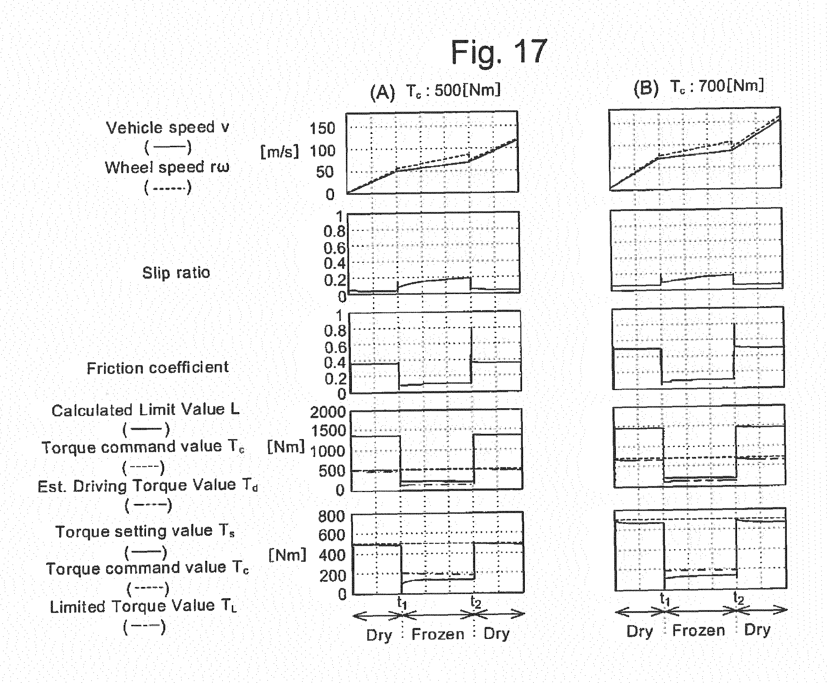

In Figs. 16 and 17, the results of similar simulations of the anti-slip performance when the feedback gain $k_p$ is calculated by using Equation (21) are shown. Note that the conditions for these simulations were the same as those in Figs. 10 and 11, with k=0.075 and $k_p$=0.75.

As shown in Figs. 16 and 17, in places where the road surface is frozen, limitation is imposed and torque reduction is performed. As a result, increase of the slip ratio is suppressed and free spinning of the driving wheel is prevented by setting the torque setting value $T_s$ appropriately.

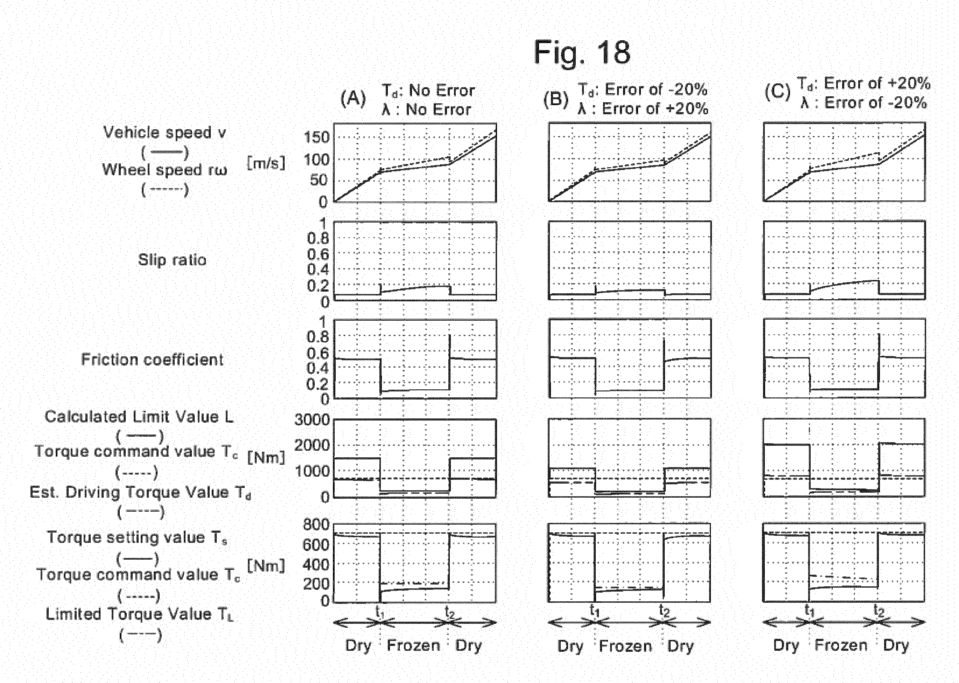

The results of simulations of anti-slip performance when the feedback gain $k_p$ is calculated by using Equation (21), in case when errors are included in the estimated slip ratio $\lambda$ and in the estimated driving torque $T_d$, are shown in Fig. 18, along with comparison examples for when no errors are present. As will be understood by comparison of Fig. 18 with Fig. 12, when the feedback gain $k_p$ is calculated by using Equation (21), even if errors are included in the estimated slip ratio $\lambda$ and in the estimated driving torque $T_d$, the results are obtained that are close to those obtained when slippage suppression is performed when no errors are present. Note that the conditions for these simulations were the same as in the case of Fig. 12 described above.

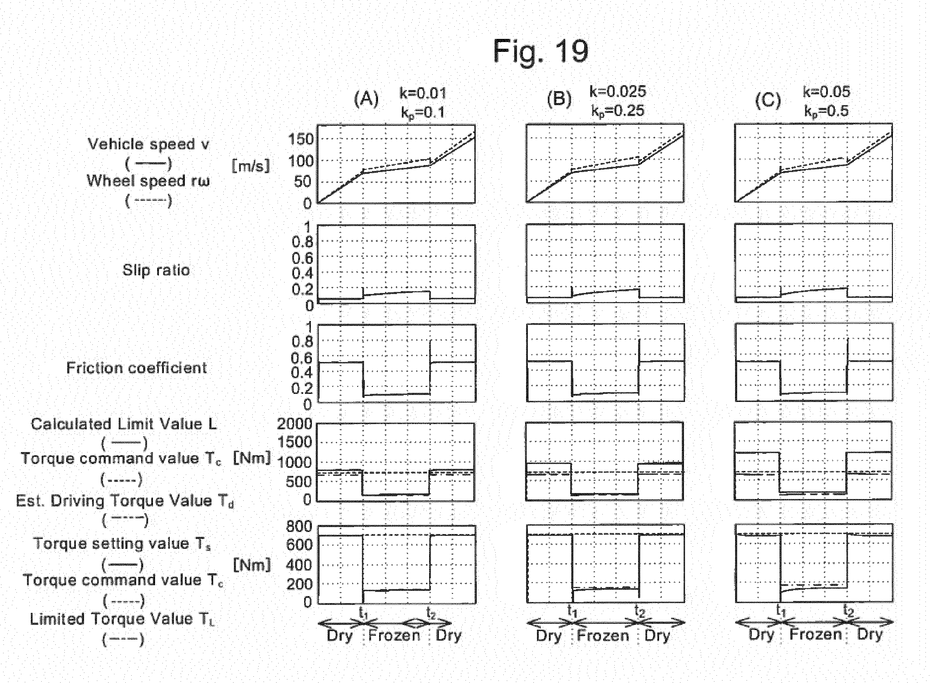

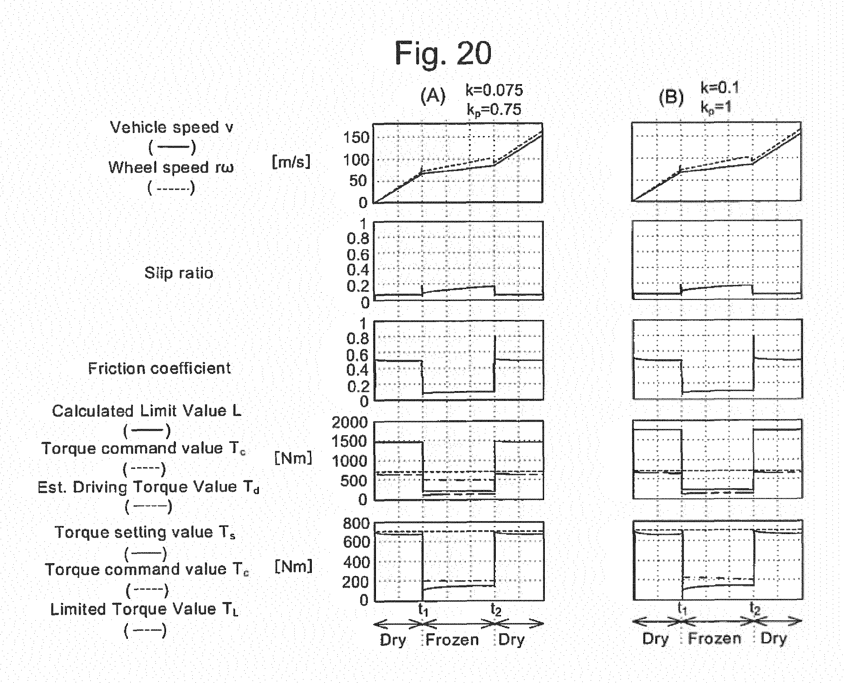

The results of anti-slip performance simulations for various combinations of values of the limiter coefficient k and the feedback gain $k_p$ that satisfy the relationship of Equation (21) are shown in Figs. 19 and 20. As will be understood from Figs. 19 and 20, two stages of reduction are performed: reduction from the torque command value $T_c$ to the limited torque value $T_L$, and reduction from the limited torque value $T_L$ to the torque setting value $T_s$. And, irrespective of the type of combination of the limiter coefficient k and the feedback gain $k_p$, finally a torque setting value $T_s$ of the same level is reached, and the slip ratio also reaches the same level. Note that the conditions for these simulations were the same as in the case of Fig. 11(C) described above.

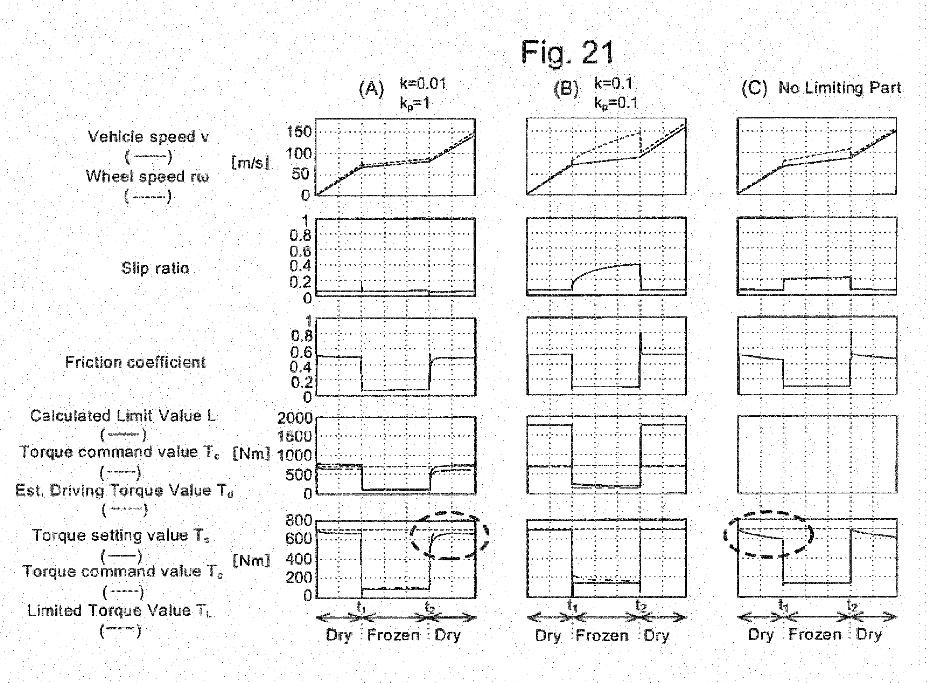

For the purposes of comparison, the results of simulations of anti-slip performance for various combinations of values of the limiter coefficient k and the feedback gain $k_p$ that do not satisfy the relationship of Equation (21) are shown in Figs. 21(A) and 21(B). As shown in Figs. 21(A) and 21(B), when the relationship of Equation (21) is not satisfied, the torque reduction may be too strong so that the torque is undesirably diminished even on a dry road surface, or slippage suppression may be insufficient, which is also undesirable.

Moreover, the results of simulation of anti-slip performance when the feedback gain $k_p$ has the large value of "10" are shown in Fig. 21(C). As shown in Fig. 21(C), in this case, it is possible to keep down the slip ratio upon a frozen road surface. However, as will be understood from the change of the torque setting value $T_s$ in the oval portion surrounded by the broken line, the torque setting value $T_s$ is greatly decreased on a dry road surface, which is undesirable.

Note that the conditions for the simulations that provided the Fig. 21 results were the same as in the case of Fig. 11(C) described above.

<Operation>

Next, the operation of the traction control device 700A having a configuration such as that described above will be explained with attention principally being directed to the processing performed by the control part 740A when a command has been issued to the effect that traction control is to be performed (hereinafter this is also sometimes termed "traction control mode processing").

Note that it will be supposed that the torque command value generation part 810, the acceleration detection part 820, the error estimation part 830, and the motor drive system 900 have already started their operation, and that the torque command value $T_c$, the acceleration $\alpha$, the estimated error ratios a and b, the rotational position $\theta$, and the detected current value $I_D$ are being successively sent to the traction control device 700A (refer to Fig. 5).

In the traction control device 700A, the movement speed acquisition part 710 acquires the movement speed v by performing time integration of the acceleration $\alpha$ sent from the acceleration detection part 820. And the movement speed acquisition part 710 successively sends the movement speed v that it has thus acquired to the control part 740A and to the error estimation part 830 (refer to Fig. 5).

Moreover, the rotational speed acquisition part 720 acquires the rotational speed $\omega$ by performing time differentiation of the rotational position $\theta$ sent from the rotational position detection part 940. And the rotational speed acquisition part 720 successively sends the rotational speed $\omega$ that it has thus acquired to the control part 740A and to the error estimation part 830 (refer to Fig. 5).

Furthermore, the actual torque value acquisition part 730 performs acquisition of the actual torque value $T_m$ by calculating the actual torque value $T_m$ on the basis of the detected current value $I_D$ sent from the current detection part 950. And the actual torque value acquisition part 730 successively sends the actual torque value $T_m$ that it has thus acquired to the control part 740A (refer to Fig. 5).

<<Processing in the traction control mode>>

In the traction control mode processing, the limiting part 741 in the control part 740A calculates the limited torque value $T_L$.

During the calculation of the limited torque value $T_L$, the limiter coefficient calculation part 761 calculates the limiter coefficient k according to the above Equation (16), on the basis of the estimated error ratios a and b sent from the error estimation part 830. And the limiter coefficient calculation part 761 sends the limiter coefficient k that it has thus calculated to the limit value calculation part 764 and to the feedback part 742 (refer to Fig. 8).

Furthermore, the slip ratio estimation part 762 performs slip ratio estimation by calculating the estimated slip ratio $\lambda$ according to the above Equation (5), on the basis of the movement speed v sent from the movement speed acquisition part 710 and the rotational speed $\omega$ sent from the rotational speed acquisition part 720. And the slip ratio estimation part 762 successively sends the slip ratio $\lambda$ that has thus been estimated to the limit value calculation part 764 (refer to Fig. 8).

Moreover, the driving torque estimation part 763 performs driving torque estimation by calculating the estimated driving torque $T_d$ by passing the value determined according to the above Equation (10) on the basis of the rotational speed $\omega$ sent from the rotational speed acquisition part 720 and the actual torque value $T_m$ sent from the actual torque value acquisition part 730 through a low pass filter (i.e. an LPF). And the driving torque estimation part 763 successively sends the estimated driving torque $T_d$ to the limit value calculation part 764 and to the error estimation part 830 (refer to Fig. 8).

Note that the driving torque estimation part 763 sends the time differentiated value (dw/dt) of the rotational speed $\omega$ that has been calculated at an intermediate stage of the calculation of the estimated driving torque $T_d$ to the feedback part 742 (refer to Fig. 8).

Moreover, the limit value calculation part 764 calculates the limit value L according to Equation (11), on the basis of the limiter coefficient k sent from the limiter coefficient calculation part 761, the estimated slip ratio $\lambda$ sent from the slip ratio estimation part 762, and the estimated driving torque $T_d$ sent from the driving torque estimation part 763. And the limit value calculation part 764 successively sends the limit value L that it has thus calculated to the limiter part 765 (refer to Fig. 8).

The limiter part 765 calculates the limited torque value $T_L$ as described above on the basis of the limit value L sent from the limit value calculation part 764, thus performing limitation control upon the torque command value $T_c$. And the limiter part 765 successively sends the limited torque value $T_L$ that it has thus calculated to the torque setting value calculation part 743A (refer to Fig. 8).

The feedback part 742 calculates a feedback torque value $T_f$ in parallel with this calculation of the limited torque value $T_L$ by the limiting part 741.

During calculation of the feedback torque value $T_f$, the adhesive model part 771 calculates the back-calculated torque value $T_n$ according to Equation (17) on the basis of the time differentiated value (d$\omega$/dt) of the rotational speed $\omega$ sent from the limiting part 741. And the adhesive model part 771 sends the back-calculated torque value $T_n$ that has thus been calculated to the subtraction part 772 (refer to Fig. 15).

Subsequently, the subtraction part 772 calculates the differential value $T_h$ according to Equation (18) on the basis of the back-calculated torque value $T_n$ sent from the adhesive model part 771 and the actual torque value $T_m$ sent from the actual torque acquisition part 730. And the subtraction part 772 sends the differential torque value $T_h$ that has thus been calculated to the LPF part 773 (refer to Fig. 15).

Next, the LPF part 773 performs filtering processing upon the differential torque value $T_h$ that has been sent from the subtraction part 772, and thereby calculates the after-filtering torque value $T_{af}$. And the LPF part 773 sends the after-filtering torque value $T_{af}$ that has thus been calculated to the multiplication part 775 (refer to Fig. 15).

In parallel with this calculation of the after-filtering torque value $T_{af}$, on the basis of the limiter coefficient k sent from the limiting part 741, the feedback gain calculation part 774 calculates the feedback gain $k_p$ according to Equation (21). And the feedback gain calculation part 774 sends the feedback gain $k_p$ that has thus been calculated to the multiplication part 775.

Next, the multiplication part 775 calculates the feedback torque value $T_f$ according to Equation (20), on the basis of the after-filtering torque value $T_{af}$ sent from the LPF part 773 and the feedback gain $k_p$ sent from the feedback gain calculation part 774. And the multiplication part 775 sends the feedback torque value $T_f$ that has thus been calculated to the torque setting value calculation part 743A.

Upon receipt of the limited torque value $T_L$ sent from the limiting part 741 and the feedback torque value $T_f$ sent from the feedback part 742, the torque setting value calculation part 743A calculates the torque setting value $T_s$ according to Equation (9). And the torque setting value calculation part 743A sends the torque setting value $T_s$ that has thus been calculated to the motor drive system 900 (refer to Fig. 7).

<<Processing in the non-traction control mode>>

In the non-traction control mode processing, the limiter part 765 of the limiting part 741 sends the torque command value $T_c$ to the torque setting value calculation part 743A as the limited torque value $T_L$. Note that, in the case of the non-traction control mode processing as well, the driving torque estimation part 763 of the limiting part 741 performs calculation of the estimated driving torque $T_d$, and sends the estimated driving torque $T_d$ that has thus been calculated to the error estimation part 830.

Moreover, in the non-traction control mode processing, the feedback part 742 takes the feedback torque value $T_f$ as being "0", and sends this to the torque setting value calculation part 743A.

As a result, the torque setting value $T_s$ calculated by the torque setting value calculation part 743A is the same as the torque command value $T_c$. Due to this, in the non-traction control mode processing, the torque command value $T_c$ is sent from the control part 740A to the motor drive system 900 as the torque setting value $T_s$ just as it is without modi fication.

And, on the basis of the torque setting value $T_s$ sent from the traction control device 700A, current corresponding to the torque setting value $T_s$ is supplied by the motor drive system 900 to the motor 930. As a result, the motor 930 is driven with a torque value that corresponds to the torque setting value $T_s$.

As has been explained above, in the first embodiment, the movement speed v of the moving body MV having the driving wheel that is driven by the motor 930, the rotational speed $\omega$ of the driving wheel of the moving body MV, and the actual torque value $T_m$ generated by the motor 930 are acquired. Here, the movement speed v, the rotational speed $\omega$, and the actual torque value $T_m$ can be acquired quickly.

Subsequently, on the basis of the movement speed v and the rotational speed $\omega$, the limiting part 741 in the control part 740A estimates the estimated slip ratio $\lambda$ of the driving wheel by using Equation (5), with which quick calculation is possible. Moreover, on the basis of the rotational speed $\omega$ and the actual torque value $T_m$, the limiting part 741 estimates the estimated driving torque $T_d$ of the driving wheel by using Equation (10), with which quick calculation is possible.

Next, on the basis of the estimated slip ratio $\lambda$ and the estimated driving torque $T_d$, the limiting part 741 calculates the limit value L for the torque command value $T_c$ by using Equation (11), with which quick calculation is possible. And the limiting part 741 performs limitation processing upon the torque command value $T_c$ by using this limit value L, and thereby calculates the limited torque value $T_L$.

In parallel with this calculation of the limited torque value $T_L$, on the basis of the time differentiated value $(d\omega/dt)$ of the rotational speed $\omega$ at this time point and the actual torque value $T_m$, the feedback part 742 in the control part 740A calculates the feedback torque value $T_f$ by using Equations (17), (18), (20), and (21) in an appropriate manner, with which quick calculation is possible. Note that the feedback part 742 calculates the feedback torque value $T_f$ on the basis of an adhesive model.

Subsequently, on the basis of the limited torque value $T_L$ and the feedback torque value $T_f$, the torque setting value calculation part 743A calculates the torque setting value $T_s$ according to Equation (9). And the torque setting value calculation part 743A sends the torque setting value $T_s$ that has thus been calculated to the motor drive system 900.

Due to this, according to the first embodiment, reduction of the torque setting value $T_s$ is performed by limitation of the torque setting value $T_s$ by feed forward control by the limiting part 741, and also by feedback control by the feedback part 742. Therefore, according to the first embodiment, it is possible for both prevention of increase of the slip ratio $\lambda$ upon a frozen road surface, and also output of sufficient torque upon a dry road surface, to be made compatible.

Moreover, in the first embodiment, the limiter coefficient k is calculated according to Equation (16), on the basis of the estimated error ratio a of the estimated driving torque $T_d$ and the estimated error ratio b of the estimated slip ratio $\lambda$. And the feedback gain $k_p$ for the feedback part 742 is calculated according to Equation (21). Due to this, it enables to perform traction control in an effective manner, even if errors are included in the estimated driving torque $T_d$ and/or in the estimated slip ratio $\lambda$.

[The second embodiment]

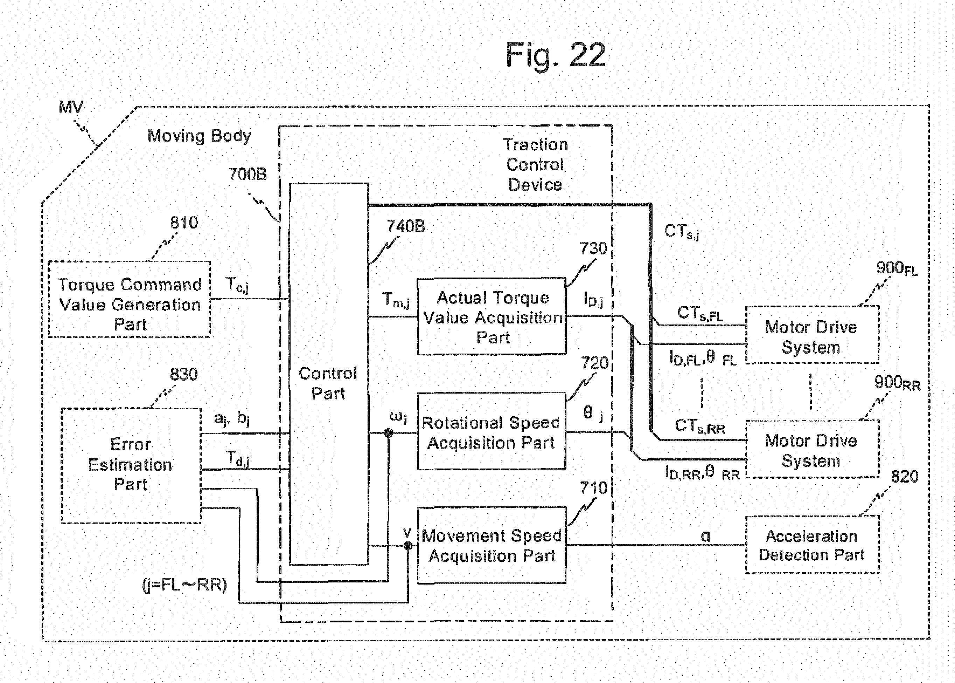

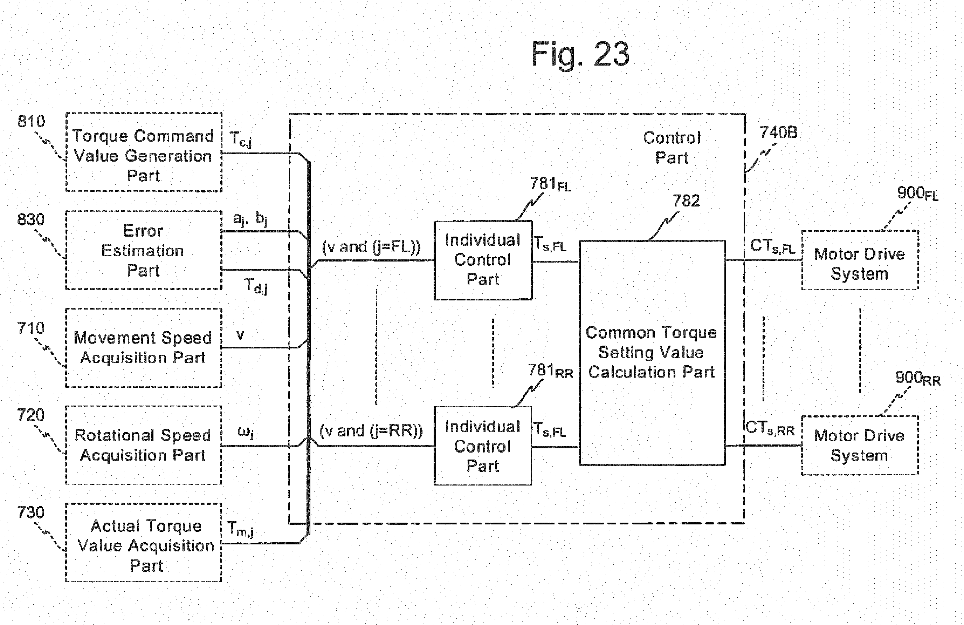

Next, the second embodiment of the present invention will be explained with principal reference to Figs. 22 and 23.

The placement and the configuration of a traction control device 700B according to the second embodiment are shown in Fig. 22. As shown in Fig. 22, the traction control device 700B is arranged within a moving body MV that has four driving wheels that can be driven independently of one another: a left front driving wheel $WH_{FL}$, a right front driving wheel $WH_{FR}$, a left rear driving wheel $WH_{RL}$, and a right rear driving wheel $WH_{RR}$.

In addition to the traction control device 700B, a torque command value generation part 810, an acceleration detection part 820, an error estimation part 830, and motor drive systems $900_{FL}$ through $900_{RR}$ are provided to the moving body MV. Here, each of the motor drive systems $900j$ (where j=FL-RR) is configured in a similar manner to the motor drive system 900 explained in the first embodiment described above.

In other words, each motor drive system 900j comprises a drive control part $910_j$ that has a similar function to that of the drive control part 910, an inverter 920j that has a similar function to that of the inverter 920, and a motor 930j that has a similar function to that of the motor 930. Moreover, each motor drive system 900j comprises a rotational position detection part 940j that has a similar function to that of the rotational position detection part 940 and a current detection part $950_j$ that has a similar function to that of the current detection part 950.

Here, the drive control part $910_j$ calculates a drive voltage on the basis of a torque setting value $CT_{s,j}$ sent from the traction control device 700B, a rotational position $\theta_j$ detected by the rotational position detection part 940j, and a detected current value $I_{D,j}$ detected by the current detection part 950j. And the drive control part $910_j$ sends the drive voltage that has thus been calculated to the inverter $920_j$.

Moreover, the rotational position detection part 940j detects the rotational position $\theta_j$ of the motor 930j. And the rotational position detection part 940j sends the rotational position $\theta_j$ that has thus been detected to the traction control device 700B and to the drive control part $910_j$.

Furthermore, the current detection part 950j detects the value of the current flowing to the motor 930j. And the current detection part 950j sends the current value that has thus been detected to the traction control device 700B and to the drive control part $910_j$ as the detected current value $I_{D,j}$.

Note that torque command values $T_{c,FL}$ through $T_{c,RR}$ corresponding respectively to the four driving wheels $WH_{FL}$ through $WH_{RR}$ are sent from the torque command value generation part 810 to the traction control device 700B.

Moreover, the error estimation part 830 estimates estimated error ratios $a_{FL}$ through $a_{RR}$ and estimated error ratios $b_{FL}$ through $b_{RR}$ corresponding respectively to the four driving wheels $WH_{FL}$ through $WH_{RR}$, and sends the results of these estimations to the traction control device 700B.

<Configuration of the traction control device 700B>

As shown in Fig. 22, as compared with the traction control device 700A in the first embodiment described above, the traction control device 700B differs by comprising a control part 740B, instead of the control part 740A. In the following, the explanation will principally concentrate upon this point of difference.

Note that the rotational speed acquisition part 720 in the second embodiment receives the rotational positions $\theta_j$ sent from the rotational position detection part 940j. And the rotational speed acquisition part 720 performs time differentiation of the rotational positions $\theta$, and thereby acquires the rotational speeds $\omega_j$. The rotational speeds $\omega_j$ that have been acquired in this manner are sent to the control part 740B and to the error estimation part 830.

Moreover, the actual torque value acquisition part 730 in the second embodiment receives the detected current values $I_{D,j}$ sent from the current detection parts 950j. Subsequently, the actual torque value acquisition part 730 calculates the motor current values Im.j on the basis of these detected current values $I_{D,j}$. Note that the motor current values $I_{m,j}$ represent the absolute magnitudes of the detected current values $I_{D,j}$, in other words $I_{m,j}=|I_{D,j}|$.

Next, by calculating the actual torque values $T_{m,j}$ by using Equation (1) given above, the actual torque value acquisition part 730 acquires the actual torque values $T_{m,j}$. The actual torque values $T_{m,j}$ that have been acquired in this manner are sent to the control part 740B.

As shown in Fig. 23, the control part 740B comprises individual control parts $781_{FL}$ through $781_{RR}$ and a common torque setting value calculation part 782.

Each of the individual control parts $781_j$ (where j=FL through RR) has a similar configuration to that of the control part 740A described above. Each of the individual control parts $781_j$ receives the torque command value $T_{c,j}$ sent from the torque command value generation part 810 and the estimated error ratios $a_j$ and $b_j$ sent from the error estimation part 830. Subsequently, the individual control part $781_j$ performs limitation control upon the torque command value $T_{c,j}$ on the basis of the speed of movement v, the rotational speed $\omega_j$, and the actual torque value $T_{m,j}$, and thereby calculates the limited torque value $T_{L,j}$. Moreover, the individual control part $781_j$ generates a feedback torque $T_{f,j}$ on the basis of the actual torque value $T_{m,j}$, the time differentiated value $(d\omega_j/dt)$ of the rotational speed $\omega_j$ that was obtained at an intermediate stage of the calculation of the limited torque value $T_{L,j}$, and the limiter coefficient kj. And the individual control part $781_j$ calculates an individual torque setting value $T_{s,j}$ on the basis of the feedback torque $T_{f,j}$ and the limited torque value $T_{L,j}$, and sends the individual torque setting value $T_{s,j}$ that has thus been calculated to the common torque setting value calculation part 782.

Note that, if no command is issued to the effect that traction control should be performed, then the individual control parts $781_j$ are adapted to send the torque command values $T_{c,j}$ to the common torque setting value calculation part 782 as the individual torque setting values $T_{s,j}$.

Moreover, the individual control part 781j sends the estimated driving torques $T_{d,j}$ to the error estimation part 830. Note that the individual control part 781j performs calculation of the estimated driving torque $T_{d,j}$ and to send the estimated driving torque $T_{d,j}$ that has thus been calculated to the error estimation part 830, irrespective of whether or not a command has been issued to the effect that traction control is to be performed.

The common torque setting value calculation part 782 receives the individual torque setting values $T_{s,j}$ sent from the individual control parts $781_j$. And, if no command has been issued to the effect that traction control is to be performed, then the common torque setting value calculation part 782 sends the individual torque setting value $T_{s,j}$ to the motor drive system 900j as a torque setting value $CT_{s,j}$.

On the other hand, if a command has been issued to the effect that traction control is to be performed, then the common torque setting value calculation part 782 finds the minimal value among the individual torque setting values $T_{s,FL}$ through $T_{s,RR}$. Subsequentlt, the common torque setting value calculation part 782 sets all of the torque setting values $CT_{s,FL}$ through $CT_{s,RR}$ to the minimal value $T_{s,min}$ that has thus been found.

And the common torque setting value calculation part 782 sends to the motor drive system 900j the torque setting values CTs,j that have thus been set to the minimal value $T_{s,min}$.

<Operation>

Next, the operation of the traction control device 700B having the configuration described above will be explained, with attention being principally concentrated upon the traction control mode processing performed by the control part 740B when a command has been issued for traction control to be performed.

Note that it will be supposed that the torque command value generation part 810, the acceleration detection part 820, the error estimation part 830, and the motor drive systems 900j have already started their operation, and that the torque command values $T_{c,j}$, the acceleration $\alpha$, the estimated error ratios $a_j$ and $b_j$, the rotational positions $\theta_j$, and the detected current values $I_{D,j}$ are being successively sent to the traction control device 700B (refer to Fig. 22).

In the traction control device 700B, the movement speed acquisition part 710 acquires the movement speed v by performing time integration of the acceleration $\alpha$ sent from the acceleration detection part 820. And the movement speed acquisition part 710 successively sends the movement speed v that it has thus acquired to the control part 740B and to the error estimation part 830 (refer to Fig. 22).

Moreover, the rotational speed acquisition part 720 acquires the rotational speeds $\omega_j$ by performing time differentiation of the rotational positions $\theta_j$ sent from the rotational position detection parts 940j. And the rotational speed acquisition part 720 successively sends the rotational speeds $\omega_j$ that it has thus acquired to the control part 740B and to the error estimation part 830 (refer to Fig. 22).

Furthermore, the actual torque value acquisition part 730 performs acquisition of the actual torque values $T_{m,j}$ by calculating the actual torque values $T_{m,j}$ on the basis of the detected current values $I_{D,j}$ sent from the current detection part 950. And the actual torque value acquisition part 730 successively sends the actual torque values $T_{m,j}$ that it has thus acquired to the control part 740B (refer to Fig. 22).

<Processing in the traction control mode>

In the traction control mode processing, the individual control parts $781_j$ in the control part 740B calculate individual torque setting values $T_{s,j}$ by performing processing similar to that performed by the control part 740A described above. And the individual control parts $781_j$ send the individual torque setting values $T_{s,j}$ that have thus been calculated to the common torque setting value calculation part 782.

Upon receipt of the individual torque setting values $T_{s,FL}$ through $T_{s,RR}$ sent from the individual control parts $781_{FL}$ through $781_{RR}$, the common torque setting value calculation part 782 finds the minimal one of these individual torque setting values $T_{s,FL}$ through $T_{s,RR}$. Subsequently, the common torque setting value calculation part 782 sets all of the torque setting values $CT_{s,FL}$ through $CT_{s,RR}$ to the minimal value $T_{s,min}$ that has thus been found. And the common torque setting value calculation part 782 sends these torque setting values CTs,j that have been thus set to the minimal value $T_{s,min}$ to the motor drive systems 900j.

Note that the individual control parts $781_j$ send the estimated driving torques $T_{d,j}$ that have been calculated at intermediate stages of calculation of the individual torque setting values $T_{s,j}$ to the error estimation part 830.

<Processing in the non-traction control mode>

In the non-traction control mode processing, the individual control parts $781_j$ of the control part 740B send the torque command values $T_{c,j}$ just as they are without modification as the individual torque setting values $T_{s,j}$. And the individual control parts $781_j$ send these individual torque setting values $T_{s,j}$ ($=T_{c,j}$) to the common torque value calculation part 782.

Upon receipt of the individual torque setting values $T_{s,FL}$ through $T_{s,RR}$ sent from the individual control parts $781_{FL}$ through $781_{RR}$, the common torque value setting part 782 takes these individual torque setting values $T_{s,FL}$ through $T_{s,RR}$ just as they are without modification as the torque setting values $CT_{s,FL}$ through $CT_{s,RR}$. Note that, in this case of the non-traction control mode processing as well, the individual control parts $781_j$ perform calculation of the estimated driving torques $T_{d,j}$, and send the estimated driving torques $T_{d,j}$ that have thus been calculated to the error estimation part 830.

Upon receipt of the individual torque setting values $T_{s,FL}$ through $T_{s,RR}$ sent from the individual control parts $781_{FL}$ through $781_{RR}$, the common torque value setting part 782 sends these individual torque setting values $T_{s,j}$ just as they are without modification to the motor drive systems 900j as the torque setting values $CT_{s,j}$. As a result, the torque command values $T_{c,j}$ are sent to the motor drive systems 900j just as they are without modification.

And, on the basis of these torque setting values $CT_{s,j}$ sent from the traction control device 700B, currents corresponding to these torque setting value CTs,j are supplied by the motor drive systems 900j to the motors 930j. As a result, the motors 930j are driven with actual torque values that correspond to the torque setting values $CT_{s,j}$.

As has been explained above, according to the second embodiment, in a similar manner to the case with the first embodiment described above, it is possible rapidly to implement control for performing stable traveling according to change of the state of the road surface, while still ensuring the required drive power.

Furthermore, with the second embodiment, the minimal one among the individually set torque values that are calculated for each of the plurality of driving wheels is taken as being the torque setting value for all of the plurality of driving wheels. In this case, it enables to ensure stable travelling, because it enables to suppress differences in the torque setting values between the plurality of driving wheels. For example, if the vehicle is traveling upon a road surface of which only the left side of the road is frozen, then, it enables to avoid torque unbalance between the left side and the right side, and to prevent change of the orientation of the moving body, because the torque setting value that is calculated by taking the driving wheels on the left side as subject is adapted for use with the driving wheels on the right side.

[Modification of the embodiment]

The present invention is not to be considered as being limited to the embodiments described above; modifications of various kinds are possible within the scope of the appended claims.

For example while, in the first and second embodiments, it was arranged to employ an acceleration sensor when acquiring the speed of movement, it may be acceptable to arrange to employ an optical type ground sensor.

Moreover while, in the first and second embodiments, the actual torque value $T_m$ of the motor was obtained from Equation (1), it may be acceptable to arrange to calculate the actual torque value $T_m$ by multiplying $T_s$ by the torque response characteristic, as in the following Equation (22):

$$T_m = T_s \cdot (1/(\tau_l \cdot s + 1)) \dots (22)$$

Here, the value $\tau_l$ is the time constant of the torque response.

Furthermore, in the first and second embodiments, the traction control device did not include the error estimation part. By contrast, it may be acceptable to arrange for the traction control device to include the error estimation part.

Moreover, in the first and second embodiments, it was arranged to calculate the limiter coefficient on the basis of the estimated error range. By contrast, if the changes of the errors in the estimated slip ratio and the estimated driving torque are small, then it may be acceptable to arrange for the limiter coefficient to be a fixed value.

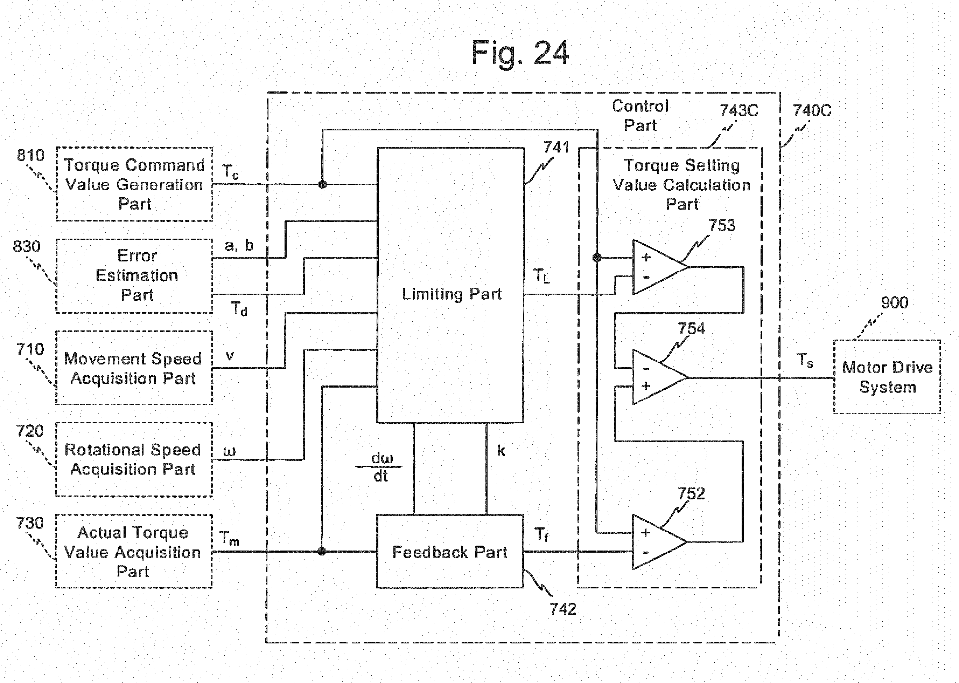

Yet further, instead of the control part 740A in the first embodiment, it may be acceptable to arrange to employ a control part 740C having a configuration such as shown in Fig. 24.

As compared to the control part 740A, the way in which the control part 740C is different is that, instead of the torque setting value calculation part 743A, it includes a torque setting value part 743C. The torque setting values calculation part 743C comprises subtraction parts 752, 753, and 754.

The subtraction part 752 receives the torque command value $T_c$ sent from the torque command value generation part 810 and the feedback torque value $T_f$ sent from the feedback part 742. And the subtraction part 752 calculates a first differential value ($T_c$-$T_f$).

The subtraction part 753 receives the torque command value $T_c$ sent from the torque command value generation part 810 and the limited torque value $T_L$ sent from the limiting part 741. And the subtraction part 753 calculates the second differential value ($T_c$-$T_L$).

The subtraction part 754 receives the first differential value ($T_c$-$T_f$) sent from the subtraction part 752 and the second differential value ($T_c$-$T_L$) sent from the subtraction part 753. And the subtraction part 754 calculates the torque setting value $T_s$ according to the following Equation (23), and sends this torque setting value $T_s$ that has thus been calculated to the motor drive system 900.

$$T_s = (T_c - T_f) - (T_c - T_L) \dots (23)$$

Here, since the right side of equation (23) is equal to $(T_L - T_f)$, accordingly the torque setting value that is calculated by the control part 740C is the same as the torque setting value calculated by the control part 740A. Due to this, according to the traction control device in which the control part 740C is employed instead of the control part 740A, it enables to obtain similar beneficial effects to those obtained in the case of the first embodiment described above.

Note that it may be acceptable to arrange to implement a change to the second embodiment that is similar to the change from the control part 740A to the control part 740C.

Furthermore, in the first and second embodiments, a case was supposed in which the response speed of the driving torque of the driving wheel or wheels to the torque setting value or values was rapid, as in the case of an in-wheel motor. By contrast, it may be acceptable to apply the present invention to a case in which the response speed of the driving torque of the driving wheel or wheels to the torque setting value or values cannot be said to be rapid.

Note that it may be acceptable to arrange to execute partial or all of the functions of the traction control device in each of embodiments described above by building the traction control device in each of embodiments described above as a computer that functions as a calculation means comprising a central processing device (CPU: Central Processing Unit) and a DSP (Digital Signal Processor) and so on, and by that computer executing a program that has been prepared in advance. This program may be recorded upon a recording medium that can be read by the computer, such as a hard disk, a CD-ROM, a DVD or the like, or may be loaded from the recording medium and executed by that computer. Moreover, it would be acceptable to arrange for the program to be acquired by the method of being recorded upon a transportable medium such as a CD-ROM, a DVD or the like; or it could also be arranged for it to be acquired by the method of being distributed via a network such as the internet or the like.

**EXAMPLE**

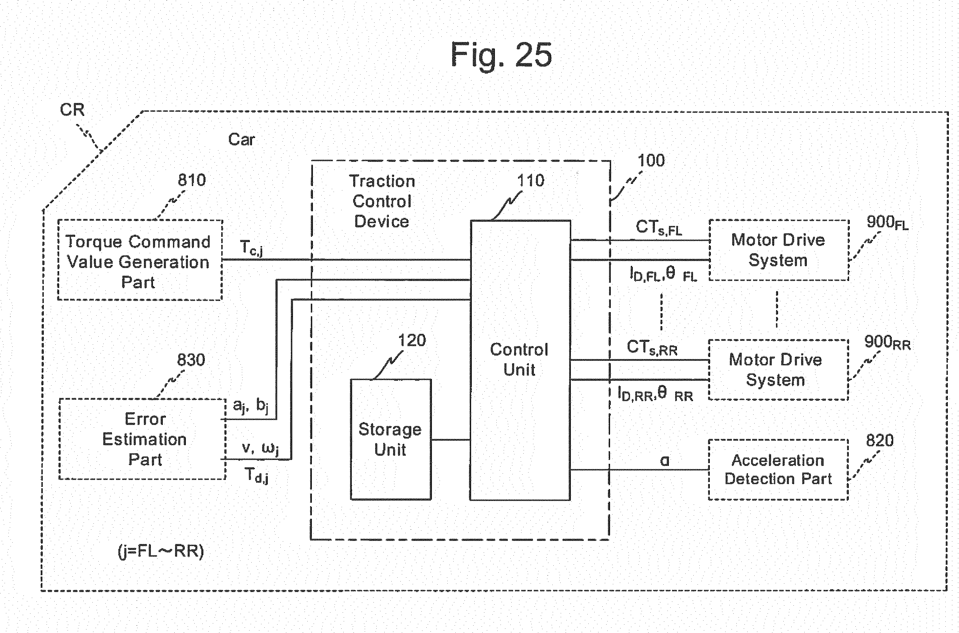

Next, an example of the present invention will be explained with principal reference to Figs. 25 through 29. Note that, in the following explanation, and including the embodiments described above, the same reference symbols are appended to elements that are the same or equivalent, and duplicated explanation is omitted as much as possible.

[Configuration]

The configuration of a traction control device 100 according to the example is schematically shown in Fig. 25. The traction control device 100 is one version of the traction control device 700B according to the second embodiment described above.

As shown in Fig. 25, the traction control device 100 is arranged within a vehicle CR, which corresponds to the above moving body MV. Note that the vehicle CR comprises four driving wheels that can be independently driven one another: a left front driving wheel $WH_{FL}$, a right front driving wheel $WH_{FR}$, a left rear driving wheel $WH_{RL}$, and a right rear driving wheel $WH_{RR}$.

In addition to the traction control device 100, a torque command value generation part 810, an acceleration detection part 820, an error estimation part 830, and motor drive systems $900_{FL}$ through $900_{RR}$ are provided to the vehicle CR. Here, each of the motor drive systems $900_j$ (where j=FL to RR) has a similar configuration to that of the motor drive systems 900j explained above in connection with the second embodiment.

<Configuration of the traction control device 100>

The traction control device 100 comprises a control unit 110 and a storage unit 120.

The control unit 110 comprises a central processing device (CPU) and a DSP (Digital Signal Processor) as a calculation means. And the control unit 110 performs, by executing a program, to fulfill the functions of the movement speed acquisition part 710, the rotational speed acquisition part 720, the actual torque value acquisition part 730, and the control part 740B in the second embodiment.

The program executed by the control unit 110 is stored in a storage unit 120, and is loaded from the storage unit and executed. It would be acceptable to arrange for the program to be acquired by the method of being recorded upon a transportable recording medium such as a CD-ROM or a DVD or the like; or it may also be acquired by the method of being distributed via a network such as the internet or the like.

Note that the processing performed by the control unit 110 will be described hereinafter.

Information and data of various types for use by the control unit 110 are stored in the storage unit 120 mentioned above. The program that is executed by the control unit 110 is included in this information and data. The control unit 110 is adapted to be capable of accessing the storage unit 120.

<Configurations of the drive control parts 910$_j$ and of the current detection parts 950j>

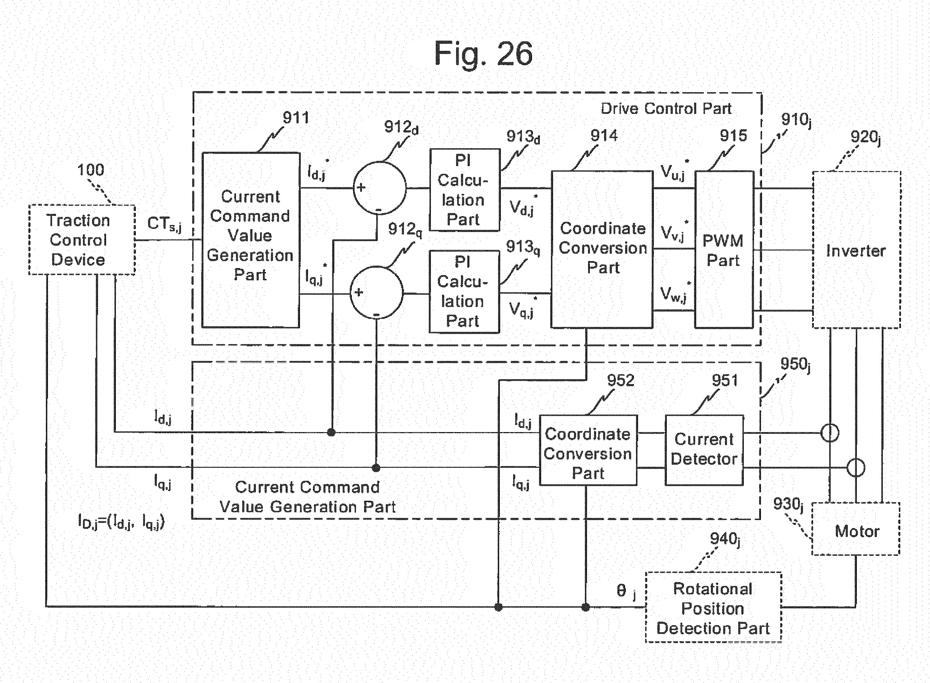

Now, one of the drive control parts 910$_j$ and one of the current detection parts 950j of the example will be explained in more detail with reference to Fig. 26. Note that, in the example, the motors 930j are three-phase motors.

First, the drive control part 910$_j$ will be explained. The drive control part 910$_j$ control the motor 930$_j$ by vector control. The drive control part 910$_j$ having the function comprises a current command value generation part 911, subtraction parts 912$_d$ and 912$_q$, and proportional integral (PI) calculation parts 913$_d$ and 913$_q$. Moreover, the drive control part 910$_j$ comprises a coordinate conversion part 914 and a pulse width modulation (PWM) part 915.

The current command value generation part 911 receives the torque setting value CT$_{s,j}$ sent from the traction control device 100. And the current command value generation part 911 generates a d axis current command value I$_{d,j}$* and a q axis current command value I$_{q,j}$* for generating a motor torque equal to the torque setting value CT$_{s,j}$. The d axis current command value I$_{d,j}$* generated in this manner is sent to the subtraction part 912$_d$, and the q axis current command value I$_{q,j}$* is sent to the subtraction part 912$_q$.

The subtraction part 912$_d$ receives the d axis current command value I$_{d,j}$* sent from the current command value generation part 911. And the subtraction part 912$_d$ subtracts the d axis detected current value I$_{d,j}$ from the d axis current command value I$_{d,j}$*. The result of the subtraction by the subtraction part 912$_d$ is sent to the PI calculation part 913$_d$.

Similarly, the subtraction part 912$_q$ receives the q axis current command value I$_{q,j}$* sent from the current command value generation part 911. And the subtraction part 912$_q$ subtracts the q axis detected current value I$_{q,j}$ from the q axis current command value I$_{q,j}$*. The result of the subtraction by the subtraction part 912$_d$ is sent to the PI calculation part 913$_q$.

The PI calculation part 913$_d$ receives the subtraction result sent from the subtraction part 912$_d$. And the PI calculation part 913$_d$ performs proportional integral calculation on the basis of the subtraction result, and thereby calculates the d axis voltage command value V$_{d,j}$*. This d axis voltage command value V$_{d,j}$* that has thus been calculated by the PI calculation part 913$_d$ is sent to the coordinate conversion part 914.

The PI calculation part 913$_q$ receives the subtraction result sent from the subtraction part 912$_q$. And the PI calculation part 913$_q$ performs proportional integral calculation on the basis of the subtraction result, and thereby calculates the q axis voltage command value V$_{q,j}$*. This q axis voltage command value V$_{q,j}$* that has thus been calculated by the PI calculation part 913$_q$ is sent to the coordinate conversion part 914.

The coordinate conversion part 914 receives the d axis voltage command value V$_{d,j}$* sent from the PI calculation part 913$_d$ and the q axis voltage command value V$_{q,j}$* sent from the PI calculation part 913$_q$. And the coordinate conversion part 914 refers to the rotational position θ$_j$ sent from the rotational position detection part 940j, and calculates a u axis control voltage value V$_{u,j}$*, a v axis control voltage value V$_{v,j}$*, and a w axis control voltage value V$_{w,j}$* by performing coordinate conversion upon the d axis voltage command value V$_{d,j}$* and the q axis voltage command value V$_{q,j}$*. The results of the calculation by the coordinate conversion part 914 are sent to the PWM part 915.

The PWM part 915 receives the three-phase control voltages sent from the coordinate conversion part 914. Then the PWM part 915 performs pulse width modulation upon these three-phase control voltages, and thereby generates three-phase PWM signals. The three-phase PWM signals that have been generated in this manner are sent to the inverter 920j.

Next, the current detection part 950j will be explained. The current detection parts 950j comprises a current detector 951 and a coordinate conversion part 952.

The current detector 951 detects the value of the u axis current values and the value of the v axis current values flowing to the motor 930j. And the current detector 951 sends the results of this detection to the coordinate conversion part 952 as a u axis detected current value I$_{u,j}$ and a v axis detected current value I$_{v,j}$. Note that, while it may be acceptable also to detect the w axis current value (I$_{w,j}$), it is also possible to manage without detecting the w axis current value (I$_{w,j}$), because the relationship "I$_{u,j}$+I$_{v,j}$+I$_{w,j}$" holds.

The coordinate conversion part 952 receives the u axis detected current value I$_{u,j}$ and the v axis detected current value I$_{v,j}$ sent from the current detector 951. And the coordinate conversion part 952 refers to the rotational position θ$_j$ sent from the rotational position detection part 940j, and calculates a d axis detected current value I$_{d,j}$ and a q axis detected current value I$_{q,j}$*, by performings coordinate conversion upon the u axis detected current value I$_{u,j}$ and the v axis detected current value I$_{v,j}$. The results of this calculation by the coordinate conversion part 952 are sent to the traction control device 100 and to the drive control part 910j as detected current values I$_{D,j}$.

Note that the magnitudes |I$_{D,j}$| of I$_{D,j}$ are calculated according to the following Equation (24):

$$|\mathbf{I_{D,j}}| = (I_{d,j}{}^2 + I_{q,j}{}^2)^{1/2} \ ... \ (24)$$

[Operation]

Next, the operation for traction control by the traction control device 100 having the configuration described above will be described, with particular attention being directed to the processing performed by the control unit 110.

Note that it will be supposed that the torque command value generation part 810, the acceleration detection part 820, the error estimation part 830, and the motor drive system 900j have already started their operation, and that the torque command values $T_{c,j}$, the acceleration $\alpha$, the estimated error ratios $a_j$ and $b_j$, the rotational positions $\theta_j$, and the detected current values $I_{D,j}$ are being successively sent to the traction control device 100 (refer to Fig. 22).

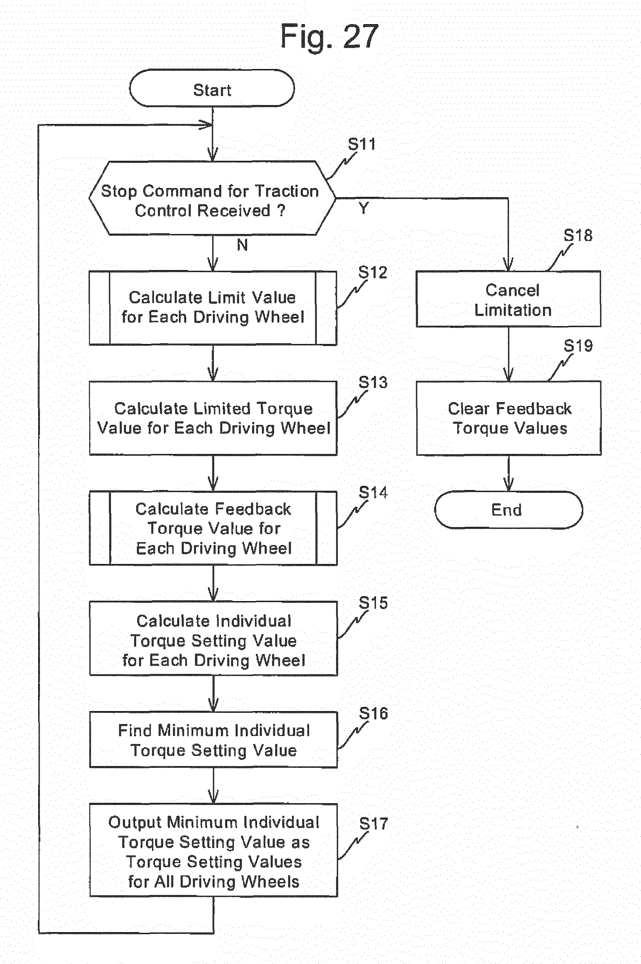

Traction control is started by the user inputting a start command for traction control via an input part not shown in the figures. During this traction control, as shown in Fig. 27, first in a step S11 the control unit 110 decides whether or not a stop command for traction control has been received via the that input part. If the result of the decision in the step S11 is negative (N in the step S11), then the flow of control proceeds to a step S12.

In the step S12, the control unit 110 calculates limit values $L_{FL}$ through $L_{RR}$ respectively corresponding to the four driving wheels $WH_{FL}$ through $WH_{RR}$. Note that this processing for calculating the limit values $L_{FL}$ through $L_{RR}$ in the step S12 will be described hereinafter.

Subsequently, in a step S13, using the limit values $L_{FL}$ through $L_{RR}$ that have thus been calculated, the control unit 110 calculates limited torque values $T_{L,FL}$ through $T_{L,RR}$ corresponding respectively to the four driving wheels $WH_{FL}$ through $WH_{RR}$.

And next, in a step S14, the control unit 110 calculates feedback torque values $T_{f,FL}$ through $T_{f,RR}$ corresponding respectively to the four driving wheels $WH_{FL}$ through $WH_{RR}$. Note that this processing for calculation of the feedback torque values $T_{f,FL}$ through $T_{f,RR}$ in the step S14 will be described hereinafter.

Then in a step S15, on the basis of the limited torque values $T_{L,FL}$ through $T_{L,RR}$ and the feedback torque values $T_{f,FL}$ through $T_{f,RR}$, the control unit 110 calculates individual torque setting values $T_{s,FL}$ through $T_{s,RR}$. Subsequently, in a step S16, the control unit 110 finds the minimal value among these individual torque setting values $T_{s,FL}$ through $T_{s,RR}$.

Next the control unit 110 sets all of the torque setting values $CT_{s,FL}$ through $T_{s,RR}$ to the minimal value $T_{s,min}$ that has thus been found. And the control unit 110 successively outputs these torque setting values $CT_{s,j}$ that have thus been set to the minimal value $T_{s,min}$ to the motor drive systems 900j (refer to Fig. 25).

When the processing of a step S17 terminates, the flow of control returns to the step S11. And subsequently the processing of the steps S11 through S17 is repeated, until the result of the decision in the step S11 becomes affirmative.

When a stop command for traction control is received, the result of the decision in the step S11 becomes affirmative (Y in the step S11), the flow of control is transferred to a step S18. In the step S18, the control unit 110 performs limitation cancellation. Subsequently, in a step S19, clearing of the feedback torque values is performed. And then the traction control procedure terminates. As a result, the torque command values $T_{c,j}$ are outputted to the motor drive systems 900j as the torque setting values $CT_{s,j}$.

<Processing for calculation of the limit values $L_{FL}$ through $L_{RR}$>

Next, the processing for calculation of the limit values $L_{FL}$ through $L_{RR}$ in the step S12 will be explained.

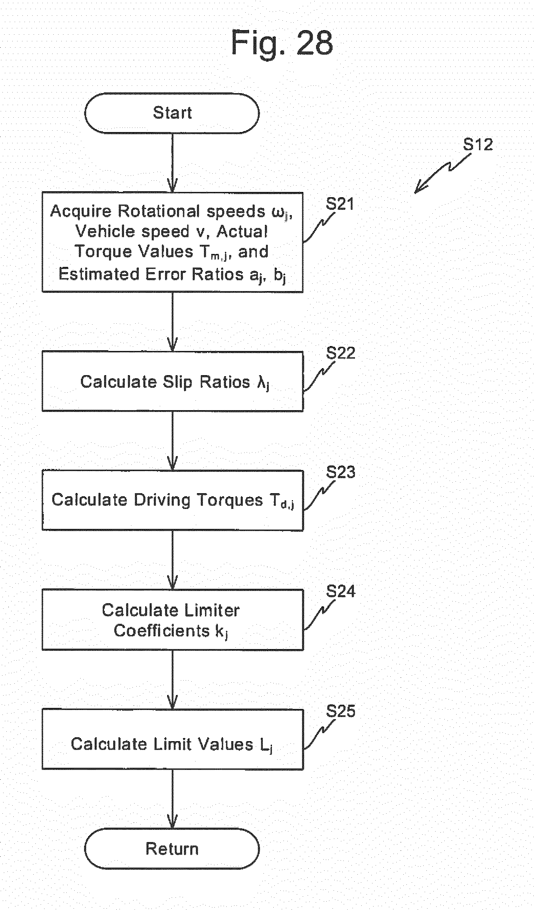

During this processing for calculation of the limit values $L_j$, as shown in Fig. 28, first in a step S21 the control unit 110 gathers the acceleration $\alpha$, the rotational positions $\theta_j$, the detected current values $I_{D,j}$, and the estimated error ratios $a_j$ and $b_j$. And the control unit 110 acquires the vehicle speed v (i.e. the movement speed) by performing time integration of the acceleration $\alpha$, acquires the rotational speeds $\omega_j$ by performing time differentiation of the rotational positions $\theta_j$, and also acquires the actual torque values $T_{m,j}$ on the basis of the detected current values $I_{D,j}$.

Next, in a step S22, on the basis of the vehicle speed v and the rotational speeds $\omega_j$, the control unit 110 performs slip ratio estimation by calculating the estimated slip ratios $\lambda_j$ according to Equation (5). And then in a step S23, on the basis of the rotational speeds $\omega_j$ and the actual torque values $T_{m,j}$, the control unit 110 performs driving torque estimation by calculating the estimated driving torques $T_{d,j}$ by using Equation (10) given above.

Then in a step S24 the control unit 110 calculates the limiter coefficients kj on the basis of Equation (16) given above. Subsequently, in a step S25, on the basis of the limiter coefficients $k_j$, the estimated slip ratios $\lambda_j$, and the estimated driving torques $T_{d,j}$, the control unit 110 calculates the limit values $L_j$ by using Equation (12) given above.

When the processing of the step S25 terminates, the processing of the step S12 terminates. And then the flow of control is transferred to the step S13 in Fig. 27.

<Processing for calculation of the feedback torque values $T_{f,PL}$ through $T_{f,RR}$>

Next, the processing for calculation of the feedback torque values $T_{f,FL}$ through $T_{f,RR}$ in the step S14 will be explained.

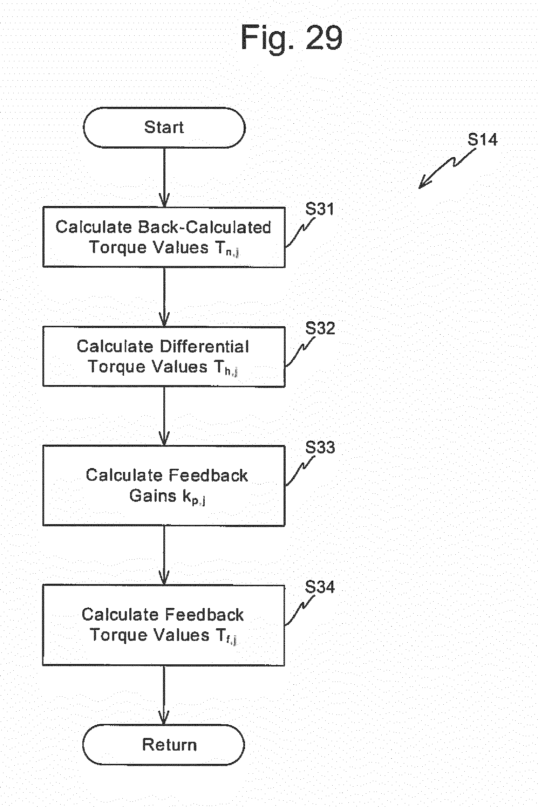

During this processing for calculation of the feedback torque values $T_{f,FL}$ through $T_{f,RR}$, as shown in Fig. 29, first in a step S31, on the basis of the rotational speed $\omega$, the control unit 110 calculates the back-calculated torque values $T_{n,j}$ by using Equation (17). Subsequently, in a step S32, on the basis of the back-calculated torque values $T_{n,j}$ and the actual torque values $T_{m,j}$, the control unit 110 calculates the differential torque values $T_{h,j}$ by using Equation (18) given above. And then the control unit 110 calculates the after-filtering torque values $T_{af,j}$ by performing filtering processing upon these differential torque values $T_{h,j}$.

Then in a step S33, on the basis of the limiter coefficient k, the control unit 110 calculates the feedback gains $k_{p,j}$ by using Equation (21) given above. Subsequently, in a step S34, on the basis of the after-filtering torque values $T_{af,j}$ and the feedback gains $k_{p,j}$, the control unit 110 calculates the feedback torque values $T_{f,j}$ by using Equation (20) given above.

When the processing of the step S34 terminates, the processing of the step S14 terminates. And then the flow of control is transferred to the step S15 in Fig. 27.

As has been explained above, in the example, acquisition is performed of the movement speed v of the moving body MV having the driving wheels that are driven by the motors 930j, the rotational speeds $\omega_j$ of the driving wheels of the moving body MV, and the actual torque values $T_{m,j}$ of at which the motors 930j are driven. Here, the movement speed v, the rotational speeds $\omega_j$, and the actual values $T_{m,j}$ can be acquired quickly.

Next, on the basis of the speed of movement v and the rotational speeds $\omega_j$, the control unit 110 estimates the estimated slip ratios $\omega_j$ of the driving wheels by using Equation (5), with which quick calculation is possible. Moreover, on the basis of the rotational speeds $\omega_j$ and the actual torque values $T_{m,j}$, the control unit 110 estimates the estimated driving torques $T_{d,j}$ of the driving wheels by using Equation (10), with which quick calculation is possible.

Next, on the basis of the estimated slip ratios $\lambda_j$ and the estimated driving torques $T_{d,j}$, the control unit 110 calculates the limit values Lj for the torque command values $T_{c,j}$ by using Equation (11), with which quick calculation is possible. And the control unit 110 performs limitation processing upon the torque command values $T_{c,j}$ by using these limit values Lj, and thereby calculates the limited torque values $T_{L,j}$.

And, in parallel with this calculation of the limited torque values $T_{L,j}$, on the basis of the rotational speeds $\omega_j$ and the actual torque values $T_{m,j}$, the control unit 110 successively calculates the feedback torque values $T_{f,j}$ by using Equations (17), (18), (20), and (21) as appropriate, with which quick calculation is possible. Note that the control unit 110 calculates the feedback torque values $T_{f,j}$ on the basis of an adhesive model.

Then, on the basis of the limited torque values $T_{L,j}$ and the feedback torque values $T_{f,j}$, the control unit 10 calculates the individual torque setting values $T_{s,j}$ according to Equation (9). Subsequently, the control unit 110 finds the minimal value among these individual torque setting values $T_{s,FL}$ through $T_{s,RR}$, and sets all of the torque setting values $CT_{s,FL}$ through $CT_{s,RR}$ to the minimal value $T_{s,min}$ that has thus been found. And the control unit 110 sends the torque setting values $CT_{s,j}$ that have thus been set to the minimal value $T_{s,min}$ to the motor drive systems 900j.

Therefore it is possible, according to change of the state of the road surface, rapidly to implement control for stable traveling while ensuring the required drive power.

Moreover, in the example, the torque setting values for all of the plurality of driving wheels are set to the minimal value among the individual torque setting values that have been individually calculated for each of the plurality of driving wheels. In this case, it enables to ensure stable traveling, because it enables to suppress differences of the torque setting values between the plurality of driving wheels. For example, if the vehicle is traveling upon a road surface of which only the left side of the road is frozen, then, since the torque setting value that is calculated by taking the driving wheels on the left side as subject is adapted for use with the driving wheels on the right side. Accordingly, it is possible to avoid torque unbalance between the left side and the right side, and it is therefore possible to prevent change of the orientation of the vehicle body.

[Modification of the example]

The present invention is not to be considered as being limited to the example described above; modifications of various kinds are possible.

For example while, in the example, it was arranged to employ an acceleration sensor when acquiring the speed of movement, it may be acceptable to arrange to employ an optical type ground sensor.

Moreover, as has been explained in connection with Fig. 26, control is performed so that the d axis detected current value $I_{d,j}$ and the q axis detected current value $I_{q,j}$ respectively become the same as the d axis current command value $I_{d,j}{}^{*}$ and the q axis current command value $I_{q,j}{}^{*}$. Accordingly, although there is some delay caused by the response time due to the PI calculations and the motor characteristics, as a result, the control is performed so that the actual torque value $T_m$ becomes equal to the torque setting value $CT_{s,j}$. Due to this, while the actual torque values $T_{m,j}$ of the motors are obtained from Equation (1) in the example, it may be acceptable to arrange to calculate the actual torque values $T_{m,j}$ by multiplying the torque setting values $CT_{s,j}$ by the torque response characteristic, according to the following Equation (25):

$$T_{m,j} = CT_{s,j} \cdot (1 / (\tau_1 \cdot s + 1)) \ldots (25)$$

Here, the value $\tau_1$ is the time constant for torque response.

Furthermore, in the example, the traction control device does not include the error estimation part. By contrast, it may be acceptable to arrange for the traction control device to include the error estimation part.

Moreover, in the example, it was arranged to calculate the limiter coefficient on the basis of the estimated error range. By contrast, if the changes of the errors in the estimated slip ratio and the estimated driving torque are small, then it may be acceptable to arrange for the limiter coefficient to be a fixed value.

Yet further, it may be acceptable to arrange to implement a modification of the example that is similar to the change from the control part 740A to the control part 740C described above.

**Claims**

1. A traction control device for a moving body having a driving wheel that is driven by a motor, the traction control device comprising:

   a movement speed acquisition part (710) acquiring a movement speed of said moving body;
   a rotational speed acquisition part (720) acquiring a rotational speed of said driving wheel;
   an actual torque value acquisition part (730) acquiring an actual torque value generated by said motor;
   a limiting part (741) imposing limitation upon an operation of said motor on the basis of a limited torque value corresponding to a slip ratio of said driving wheel, said slip ratio being estimated on the basis of said movement speed and said rotational speed;
   a feedback part (742) applying feedback to the operation of said motor using a feedback torque value, said feedback torque value being calculated on the basis of a back-calculated torque value and said actual torque value, said back-calculated torque value being obtained by multiplying a value obtained by differentiating said rotational speed by a characteristic value which specifies a virtual model in which slipping of said driving wheel does not occur; and
   a torque setting value calculation part (743A, 743C) that calculates a torque setting value corresponding to a torque to be generated by said motor, wherein said limiting part comprises:

      a slip ratio estimation part (762) estimating the slip ratio of said driving wheel on the basis of said movement speed and said rotational speed;
      a driving torque estimation part (763) estimating the driving torque for said driving wheel on the basis of a value obtained by subtracting, from said actual torque value, a value obtained by multiplying a value obtained by differentiating the rotational speed of said driving wheel by the value of the moment of inertia of said driving wheel;
      a limit value calculation part (764) calculating a limit value for performing limitation processing upon the torque command value on the basis of said estimated slip ratio and said estimated driving torque; and
      a limiter part (765), using said calculated limit value, calculating said limited torque value by performing said limitation processing upon said torque command value; and wherein:

         said feedback part (742) calculates said feedback torque value on the basis of a first subtracted value that is obtained by subtracting said back-calculated torque value from said actual torque value; and
         said torque setting value calculation part (743A, 743C) calculates, as said torque setting value, a second subtracted value that is obtained by subtracting said feedback torque value from said limited torque value;

   **characterized in that**
   said limit value calculation part (764) calculates said limit value so that, the smaller the estimated slip ratio is, the larger difference from said estimated driving torque becomes, and the larger the estimated slip ratio is, the smaller difference from said estimated driving torque becomes.

2. The traction control device according to Claim 1, wherein said limit value calculation part (764) calculates said limit value by multiplying said estimated driving torque by a value corresponding to said estimated slip ratio.

3. The traction control device according to Claim 1, wherein said limit value calculation part (764) calculates said limit value L according to equation (I) below, using said estimated driving torque $T_d$, said estimated slip ratio $\lambda$, and a constant p and a limiter coefficient k:

$$L = T_d \cdot (p + k/\lambda) \ldots \qquad (I)$$

4.  The traction control device according to Claim 3, wherein said limiter coefficient k is calculated according to Equation (II) below, using an estimated value a of the proportion of the lower limit value of the error range of said estimated driving torque $T_d$ with respect to the true value of said driving torque, and an estimated value b of the proportion of the upper limit value of the error range of said estimated slip ratio $\lambda$ with respect to the true value of said slip ratio:

$$k = k^* \cdot (b/a) + \lambda_0 \cdot ((b/a) - b) \ldots (II)$$

here the value $k^*$ is a value of said limiter coefficient k that can provide an appropriate torque setting value, when the errors in said estimated driving torque $T_d$ and said estimated slip ratio $\lambda$ are small and when said limited torque value that is obtained using the limit value that is calculated according to the above Equation (I) with said constant p being set to "1" is taken as said torque setting value; and said value $\lambda_0$ is the value of the slip ratio when the friction coefficient of said driving wheel against said road surface becomes maximal.

5.  The traction control device according to Claim 4, wherein:

    said feedback part (742) calculates said feedback torque value by imparting a primary delay to said first subtracted value, and then multiplying it by a feedback gain $k_p$; and
    said feedback gain $k_p$ is calculated according to the following Equation (III), using a constant c that is determined in advance:

$$k_p = c \cdot k \ldots (III)$$

6.  The traction control device according to any one of Claims 1 through 5, wherein:

    the number of said driving wheels is plural; and
    there is further provided a common torque value calculation part (782) that sets the minimal value of torque setting values that have been calculated for each of said plurality of driving wheels as a common torque setting value for all of said plurality of driving wheels.

7.  A traction control method that is used by a traction control device for a moving body having a driving wheel that is driven by a motor, comprising the steps of:

    acquiring a movement speed of said moving body, a rotational speed of said driving wheel, and an actual torque value generated by said motor;
    limiting an operation of said motor on the basis of a limited torque value corresponding to a slip ratio of said driving wheel, said slip ratio being estimated on the basis of said movement speed and said rotational speed;
    applying feedback to the operation of said motor using a feedback torque value, said feedback torque value being calculated on the basis of a back-calculated torque value and said actual torque value, said back-calculated torque value being obtained by multiplying a value obtained by differentiating said rotational speed by a characteristic value which specifies a virtual model in which slipping of said driving wheel does not occur; and
    calculating a torque setting value corresponding to a torque to be generated by said motor; wherein said limiting step comprises:

        estimating the slip ratio of said driving wheel on the basis of said movement speed and said rotational speed;
        estimating the driving torque for said driving wheel on the basis of a value obtained by subtracting, from said actual torque value, a value obtained by multiplying a value obtained by differentiating the rotational speed of said driving wheel by the value of the moment of inertia of said driving wheel;
        calculating a limit value for performing limitation processing upon the torque command value on the basis of said estimated slip ratio and said estimated driving torque; and
        calculating said limited torque value by performing said limitation processing upon said torque command value, using said calculated limit value; and wherein:

in said applying feedback step, said feedback torque value is calculated on the basis of a first subtracted value that is obtained by subtracting said back-calculated torque value from said actual torque value; and in said torque setting value calculating step, said torque setting value is calculated by subtracting said feedback torque value from said limited torque value,

**characterized in that**

in said limit value calculating step, said limit value is calculated so that, the smaller the estimated slip ratio is, the larger difference from said estimated driving torque becomes, and the larger the estimated slip ratio is, the smaller difference from said estimated driving torque becomes.

8. A traction control program, wherein it causes a computer in a traction control device for a moving body having a driving wheel that is driven by a motor to execute a traction control method according to Claim 7.

9. A recording medium, wherein a traction control program according to Claim 8 is recorded thereupon in form that can be read by a computer in a traction control device for a moving body having a driving wheel that is driven by a motor.

**Patentansprüche**

1. Antriebs- bzw. Traktionsregelungsvorrichtung für einen sich bewegenden Körper mit einem Antriebsrad, das von einem Motor angetrieben wird, wobei die Traktionsregelungsvorrichtung umfasst:

einen Bewegungsgeschwindigkeits-Erfassungsteil (710), der eine Bewegungsgeschwindigkeit des sich bewegenden Körpers erfasst;
einen Drehzahl-Erfassungsteil (720), der eine Drehzahl des Antriebsrades erfasst;
einen Ist-Drehmomentwert-Erfassungsteil (730), der einen durch den Motor erzeugten Ist-Drehmomentwert erfasst;
einen Begrenzungsteil (741), der einem Betrieb des Motors auf der Basis eines Wertes des begrenzten Drehmoments entsprechend einem Schlupfverhältnis des Antriebsrades eine Begrenzung auferlegt, wobei das Schlupfverhältnis auf der Basis der Bewegungsgeschwindigkeit und der Drehzahl geschätzt wird;
einen Rückkopplungsteil (742), der eine Rückkopplung auf den Betrieb des Motors mittels eines Rückkopplungs-Drehmomentwertes anwendet, wobei der Rückkopplungs-Drehmomentwert auf der Basis eines zurückberechneten Drehmomentwertes und des Ist-Drehmomentwertes berechnet wird, wobei der zurückberechnete Drehmomentwert durch Multiplizieren eines Wertes bezogen wird, den man durch Differenzieren der Drehzahl mit einem charakteristischen Wert bezieht, der ein virtuelles Modell spezifiziert, in dem ein Schlupf des Antriebsrades nicht auftritt; und
einen Drehmomenteinstellwert-Berechnungsteil (743A, 743C), der einen Drehmomenteinstellwert berechnet, der einem von dem Motor zu erzeugendem Drehmoment entspricht, wobei der Begrenzungsteil umfasst:

einen Schlupfverhältnis-Schätzteil (762), der das Schlupfverhältnis des Antriebsrades auf der Basis der Bewegungsgeschwindigkeit und der Drehzahl schätzt;
einen Antriebsdrehmoment-Schätzteil (763), der das Antriebsdrehmoment für das Antriebsrad auf der Basis eines Wertes schätzt, der durch Subtrahieren von dem Ist-Drehmomentwert eines Wertes bezogen wird, der durch Multiplizieren eines Wertes bezogen wird, der durch Differenzieren der Drehzahl des Antriebsrades mit dem Trägheitsmomentwert des Antriebsrades bezogen wird;
einen Grenzwertberechnungsteil (764), der einen Grenzwert zum Durchführen einer Begrenzungsverarbeitung auf das Drehmoment-Sollwert auf der Basis des geschätzten Schlupfverhältnisses und des geschätzten Antriebsmoments berechnet; und
einen Begrenzerteil (765), der mittels des berechneten Grenzwertes den Wert des begrenzten Drehmoments berechnet, indem die Begrenzungsverarbeitung auf den Drehmoment-Sollwert durchgeführt wird; und wobei:

der Rückkopplungsteil (742) den Rückkopplungs-Drehmomentwert auf der Basis eines ersten subtrahierten Wertes berechnet, der durch Subtrahieren des zurückberechneten Drehmomentwertes von dem Ist-Drehmomentwert bezogen wird; und
der Drehmomenteinstellwert-Berechnungsteil (743A, 743C) als den Drehmoment-Einstellwert einen zweiten subtrahierten Wert berechnet, der durch Subtrahieren des Rückkopplungs-Drehmomentwertes von dem Wert des begrenzten Drehmoments bezogen wird;

**dadurch gekennzeichnet, dass**
der Grenzwert-Berechnungsteil (764) den Grenzwert so berechnet, dass, je kleiner das geschätzte Schlupfverhältnis ist, desto größer die Differenz von dem geschätzten Antriebsdrehmoment wird, und je größer das geschätzte Schlupfverhältnis ist, desto kleiner die Differenz von dem geschätzten Antriebsdrehmoment wird.

2. Traktionsregelungsvorrichtung nach Anspruch 1, wobei der Grenzwert-Berechnungsteil (764) den Grenzwert durch Multiplizieren des geschätzten Antriebsdrehmoments mit einem Wert entsprechend dem geschätzten Schlupfverhältnis berechnet.

3. Traktionsregelungsvorrichtung nach Anspruch 1, wobei der Grenzwert-Berechnungsteil (764) den Grenzwert L entsprechend der nachstehenden Gleichung (I) mittels des geschätzten Antriebsdrehmoments $T_d$, des geschätzten Schlupfverhältnisses $\lambda$ und einer Konstanten p und eines Begrenzerkoeffizienten k berechnet:

$$L = T_d \, (p + k/\lambda)… \qquad (I)$$

4. Traktionsregelungsvorrichtung nach Anspruch 3, wobei der Begrenzerkoeffizient k entsprechend der nachstehenden Gleichung (II) mittels eines geschätzten Wertes a des Verhältnisses des unteren Grenzwertes des Fehlerbereiches des geschätzten Antriebsmoments $T_d$ mit Bezug auf den tatsächlichen Wert des Antriebsmoments und eines geschätzten Wertes b des Verhältnisses des oberen Grenzwertes des Fehlerbereiches des geschätzten Schlupfverhältnisses $\lambda$ mit Bezug auf den tatsächlichen Wert des Schlupfverhältnisses berechnet wird:

$$k = k^* \cdot (b/a) + \lambda_0 \cdot ((b/a) - b) … \qquad (II).$$

hier ist der Wert $k^*$ ein Wert des Begrenzerkoeffizienten k, der einen geeigneten Drehmoment-Einstellwert bereitstellen kann, wenn die Fehler in dem geschätzten Antriebsdrehmoment $T_d$ und dem geschätzten Schlupfverhältnis $\lambda$ klein sind und wenn der Wert des begrenzten Drehmoments, der mittels des Grenzwertes bezogen wird, der entsprechend der obigen Gleichung (I) berechnet wird, wobei die Konstante p auf "1" eingestellt wird, als der Drehmomenteinstellwert genommen wird; wobei der Wert $\lambda_0$ der Wert des Schlupfverhältnisses ist, wenn der Reibungskoeffizient des Antriebsrades gegenüber der Fahrbahnoberfläche maximal wird.

5. Traktionsregelungsvorrichtung nach Anspruch 4, wobei:

der Rückkopplungsteil (742) den Rückkopplungs-Drehmomentwert berechnet, indem dem ersten subtrahierten Wert eine Primärverzögerung auferlegt und er dann mit einer Rückkopplungsverstärkung $k_p$ multipliziert wird; wobei
die Rückkopplungsverstärkung $k_p$ entsprechend der folgenden Gleichung (III) mittels einer Konstanten c berechnet wird, die im Voraus bestimmt wird:

$$k_p = c \cdot k \; … \qquad (III)$$

6. Traktionsregelungsvorrichtung nach einem der Ansprüche 1 bis 5, wobei:

die Anzahl der Antriebsräder mehrere ist und
des Weiteren ein gemeinsamer Drehmomentwert-Berechnungsteil (782) bereitgestellt wird, der den Minimalwert von Drehmoment-Einstellwerten einstellt, die für jedes aus der Vielzahl von Antriebsrädern als ein gemeinsamer Drehmoment-Einstellwert für alle aus der Vielzahl von Antriebsrädern berechnet worden sind.

7. Antriebs- bzw. Traktionsregelungsverfahren, das von einer Traktionsregelungsvorrichtung für einen sich bewegenden Körper mit einem Antriebsrad verwendet wird, das von einem Motor angetrieben wird, umfassend die Schritte:

Erfassen einer Bewegungsgeschwindigkeit des sich bewegenden Körpers, einer Drehzahl des Antriebsrades und eines durch den Motor erzeugten Ist-Drehmomentwertes;

Begrenzen eines Betriebs des Motors auf der Basis eines Wertes des begrenzten Drehmoments entsprechend einem Schlupfverhältnis des Antriebsrades, wobei das Schlupfverhältnis auf der Basis der Bewegungsgeschwindigkeit und der Drehzahl geschätzt wird;

Anwenden einer Rückkopplung auf den Betrieb des Motors mittels eines Rückkopplungs-Drehmomentwertes, wobei der Rückkopplungs-Drehmomentwert auf der Basis eines zurückberechneten Drehmomentwertes und des Ist-Drehmomentwertes berechnet wird, wobei der zurückberechnete Drehmomentwert durch Multiplizieren eines Wertes bezogen wird, den man durch Differenzieren der Drehzahl mit einem charakteristischen Wert bezieht, der ein virtuelles Modell spezifiziert, in dem ein Schlupf des Antriebsrades nicht auftritt; und

Berechnen eines Drehmomenteinstellwertes, der einem von dem Motor zu erzeugendem Drehmoment entspricht; wobei der Begrenzungsschritt umfasst:

Schätzen des Schlupfverhältnisses des Antriebsrades auf der Basis der Bewegungsgeschwindigkeit und der Drehzahl;

Schätzen des Antriebsdrehmoments für das Antriebsrad auf der Basis eines Wertes, der durch Subtrahieren von dem Ist-Drehmomentwert eines Wertes bezogen wird, der durch Multiplizieren eines Wertes bezogen wird, der durch Differenzieren der Drehzahl des Antriebsrades mit dem Trägheitsmomentwert des Antriebsrades bezogen wird;

Berechnen eines Grenzwertes zum Durchführen einer Begrenzungsverarbeitung auf den Drehmoment-Sollwert auf der Basis des geschätzten Schlupfverhältnisses und des geschätzten Antriebsmoments und Berechnen des Wertes des begrenzten Drehmoments durch Durchführen der Begrenzungsverarbeitung auf den Drehmoment-Sollwert mittels des berechneten Grenzwertes; und wobei:

in dem Schritt zum Anwenden der Rückkopplung der Rückkopplungs-Drehmomentwert auf der Basis eines ersten subtrahierten Wertes berechnet wird, der durch Subtrahieren des zurückberechneten Drehmomentwertes von dem Ist-Drehmomentwert bezogen wird; und

in dem Drehmomenteinstellwert-Berechnungsschritt der Drehmoment-Einstellwert durch Subtrahieren des Rückkopplungs-Drehmomentwertes von dem Wert des begrenzten Drehmoments berechnet wird,

**dadurch gekennzeichnet, dass**

in dem Grenzwert-Berechnungsschritt der Grenzwert so berechnet wird, dass, je kleiner das geschätzte Schlupfverhältnis ist, desto größer die Differenz von dem geschätzten Antriebsdrehmoment wird, und je größer das geschätzte Schlupfverhältnis ist, desto kleiner die Differenz von dem geschätzten Antriebsdrehmoment wird.

8. Traktionsregelungsprogramm, wobei es einen Computer in einer Traktionsregelungsvorrichtung für einen sich bewegenden Körper mit einem Antriebsrad, das von einem Motor angetrieben wird, ein Traktionsregelungsverfahren nach Anspruch 7 ausführen lässt.

9. Aufzeichnungsmedium, wobei ein Traktionsregelungsprogramm nach Anspruch 8 darauf in einer Form aufgezeichnet ist, die von einem Computer in einer Traktionsregelungsvorrichtung für einen sich bewegenden Körper mit einem Antriebsrad, das von einem Motor angetrieben wird, gelesen werden kann.

**Revendications**

1. Dispositif de commande de traction pour un corps mobile ayant une roue d'entraînement qui est entraînée par un moteur, le dispositif de commande de traction comprenant :

une partie d'acquisition de vitesse de déplacement (710) acquérant une vitesse de déplacement dudit corps mobile ;

une partie d'acquisition de vitesse de rotation (720) acquérant une vitesse de rotation de ladite roue d'entraînement ;

une partie d'acquisition de valeur de couple réelle (730) acquérant une valeur de couple réelle générée par ledit moteur ;

une partie de limitation (741) imposant une limitation à un fonctionnement dudit moteur sur la base d'une valeur de couple limitée correspondant à un rapport de glissement de ladite roue d'entraînement, ledit rapport de glissement étant estimé sur la base de ladite vitesse de déplacement et de ladite vitesse de rotation ;

une partie de rétroaction (742) appliquant une rétroaction au fonctionnement dudit moteur en utilisant une valeur de couple de rétroaction, ladite valeur de couple de rétroaction étant calculée sur la base d'une valeur de couple rétro-calculée et de ladite valeur de couple réelle, ladite valeur de couple rétro-calculée étant obtenue en multipliant une valeur obtenue en différenciant ladite vitesse de rotation par une valeur caractéristique qui spécifie un modèle virtuel dans lequel un glissement de ladite roue d'entraînement ne se produit pas ; et
une partie de calcul de valeur de réglage de couple (743A, 743C) qui calcule une valeur de réglage de couple correspondant à un couple à générer par ledit moteur, dans lequel ladite partie de limitation comprend :

une partie d'estimation de rapport de glissement (762) estimant le rapport de glissement de ladite roue d'entraînement sur la base de ladite vitesse de déplacement et de ladite vitesse de rotation ;
une partie d'estimation de couple d'entraînement (763) estimant le couple d'entraînement pour ladite roue d'entraînement sur la base d'une valeur obtenue en soustrayant, de ladite valeur de couple réelle, une valeur obtenue en multipliant une valeur obtenue en différenciant la vitesse de rotation de ladite roue d'entraînement par la valeur du moment d'inertie de ladite roue d'entraînement ;
une partie de calcul de valeur limite (764) calculant une valeur limite pour effectuer un traitement de limitation sur la valeur d'instruction de couple sur la base dudit rapport de glissement estimé et dudit couple d'entraînement estimé ; et
une partie de limiteur (765), utilisant ladite valeur limite calculée, calculant ladite valeur de couple limitée en effectuant ledit traitement de limitation sur ladite valeur d'instruction de couple ; et dans lequel :

ladite partie de rétroaction (742) calcule ladite valeur de couple de rétroaction sur la base d'une première valeur soustraite qui est obtenue en soustrayant ladite valeur de couple rétro-calculée à partir de ladite valeur de couple réelle ; et
ladite partie de calcul de valeur de réglage de couple (743A, 743C) calcule, en tant que ladite valeur de réglage de couple, une seconde valeur soustraite qui est obtenue en soustrayant ladite valeur de couple de rétroaction à partir de ladite valeur de couple limitée ;

**caractérisé en ce que**
ladite partie de calcul de valeur limite (764) calcule ladite valeur limite de telle sorte que, plus le rapport de glissement estimé est petit, plus la différence par rapport audit couple d'entraînement estimé devient grande, et plus le rapport de glissement estimé est grand, plus la différence par rapport audit couple d'entraînement estimé devient petite.

2. Dispositif de commande de traction selon la revendication 1, dans lequel ladite partie de calcul de valeur limite (764) calcule ladite valeur limite en multipliant ledit couple d'entraînement estimé par une valeur correspondant audit rapport de glissement estimé.

3. Dispositif de commande de traction selon la revendication 1, dans lequel ladite partie de calcul de valeur limite (764) calcule ladite valeur limite L conformément à l'équation (I) ci-dessous, en utilisant ledit couple d'entraînement estimé $T_d$, ledit rapport de glissement estimé $\lambda$, et une constante p et un coefficient limiteur k :

$$L = T_d \cdot (p + k/\lambda) \dots \quad (I).$$

4. Dispositif de commande de traction selon la revendication 3, dans lequel ledit coefficient limiteur k est calculé conformément à l'Équation (II) ci-dessous, en utilisant une valeur estimée a de la proportion de la valeur limite inférieure de la plage d'erreur dudit couple d'entraînement estimé $T_d$ par rapport à la valeur vraie dudit couple d'entraînement, et une valeur estimée b de la proportion de la valeur limite supérieure de la plage d'erreur dudit rapport de glissement estimé $\lambda$ par rapport à la valeur vraie dudit rapport de glissement :

$$k = k^* \cdot (b/a) + \lambda_0 ((b/a) - b) \dots \quad (II)$$

ici la valeur k* est une valeur dudit coefficient limiteur k qui peut fournir une valeur de réglage de couple appropriée, lorsque les erreurs dans ledit couple d'entraînement estimé $T_d$ et ledit rapport de glissement estimé $\lambda$ sont faibles et lorsque ladite valeur de couple limitée qui est obtenue en utilisant la valeur limite qui est calculée conformément à l'Équation (I) ci-dessus, ladite constante p qui est établie à « 1 » étant prise comme ladite valeur de réglage de couple ; et ladite valeur $\lambda_0$ est la valeur du rapport de glissement lorsque le coefficient de frottement de ladite roue d'entraînement contre ladite surface de route devient maximal.

**5.** Dispositif de commande de traction selon la revendication 4, dans lequel :

ladite partie de rétroaction (742) calcule ladite valeur de couple de rétroaction en conférant un retard primaire à ladite première valeur soustraite, puis en multipliant celle-ci par un gain de rétroaction $k_p$ ; et

ledit gain de rétroaction $k_p$ est calculé conformément à l'Équation (III) suivante, en utilisant une constante c qui est déterminée à l'avance :

$$k_p = c \cdot k \dots \quad (III).$$

**6.** Dispositif de commande de traction selon l'une quelconque des revendications 1 à 5, dans lequel :

le nombre desdites roues d'entraînement est pluriel ; et

il est en outre prévu une partie de calcul de valeur de couple commune (782) qui établit la valeur minimale de valeurs de réglage de couple qui ont été calculées pour chacune de ladite pluralité de roues d'entraînement en tant que valeur de réglage de couple commune pour la totalité de ladite pluralité de roues d'entraînement.

**7.** Procédé de commande de traction qui est utilisé par un dispositif de commande de traction pour un corps mobile ayant une roue d'entraînement qui est entraînée par un moteur, comprenant les étapes consistant à :

acquérir une vitesse de déplacement dudit corps mobile, une vitesse de rotation de ladite roue d'entraînement, et une valeur de couple réelle générée par ledit moteur ;

limiter un fonctionnement dudit moteur sur la base d'une valeur de couple limitée correspondant à un rapport de glissement de ladite roue d'entraînement, ledit rapport de glissement étant estimé sur la base de ladite vitesse de déplacement et de ladite vitesse de rotation ;

appliquer une rétroaction au fonctionnement dudit moteur en utilisant une valeur de couple de rétroaction, ladite valeur de couple de rétroaction étant calculée sur la base d'une valeur de couple rétro-calculée et de ladite valeur de couple réelle, ladite valeur de couple rétro-calculée étant obtenue en multipliant une valeur obtenue en différenciant ladite vitesse de rotation par une valeur caractéristique qui spécifie un modèle virtuel dans lequel un glissement de ladite roue d'entraînement ne se produit pas ; et

calculer une valeur de réglage de couple correspondant à un couple à générer par ledit moteur ; dans lequel ladite étape de limitation comprend :

l'estimation du rapport de glissement de ladite roue d'entraînement sur la base de ladite vitesse de déplacement et de ladite vitesse de rotation ;

l'estimation du couple d'entraînement pour ladite roue d'entraînement sur la base d'une valeur obtenue en soustrayant, de ladite valeur de couple réelle, une valeur obtenue en multipliant une valeur obtenue en différenciant la vitesse de rotation de ladite roue d'entraînement par la valeur du moment d'inertie de ladite roue d'entraînement ;

le calcul d'une valeur limite pour effectuer un traitement de limitation sur la valeur d'instruction de couple sur la base dudit rapport de glissement estimé et dudit couple d'entraînement estimé ; et

le calcul de ladite valeur de couple limitée en effectuant ledit traitement de limitation sur ladite valeur d'instruction de couple, en utilisant ladite valeur limite calculée ; et

dans lequel :

lors de ladite étape d'application de rétroaction, ladite valeur de couple de rétroaction est calculée sur la base d'une première valeur soustraite qui est obtenue en soustrayant ladite valeur de couple rétro-calculée à partir de ladite valeur de couple réelle ; et

lors de ladite étape de calcul de valeur de réglage de couple, ladite valeur de réglage de couple est calculée en soustrayant ladite valeur de couple de rétroaction à partir de ladite valeur de couple limitée,

**caractérisé en ce que**

lors de ladite étape de calcul de valeur limite, ladite valeur limite est calculée de telle sorte que, plus le rapport de glissement estimé est petit, plus la différence par rapport audit couple d'entraînement estimé devient grande, et plus le rapport de glissement estimé est grand, plus la différence par rapport audit couple d'entraînement estimé devient petite.

**8.** Programme de commande de traction, dans lequel il amène un ordinateur dans un dispositif de commande de traction pour un corps mobile ayant une roue d'entraînement qui est entraînée par un moteur à exécuter un procédé de commande de traction selon la revendication 7.

**9.** Support d'enregistrement, dans lequel un programme de commande de traction selon la revendication 8 est enregistré sous une forme qui peut être lue par un ordinateur dans un dispositif de commande de traction pour un corps mobile ayant une roue d'entraînement qui est entraînée par un moteur.

# Fig. 1

# Fig.2

# Fig. 3

(A) $T_c$ : 100[Nm]   (B) $T_c$ : 120[Nm]   (C) $T_c$ : 130[Nm]

Vehicle speed v
( —— )
Wheel speed rω
( ----- )

Slip ratio λ

Friction coefficient μ

Torque command value $T_c$
(= Torque setting value $T_s$)

Dry  Frozen  Dry     Dry  Frozen  Dry     Dry  Frozen  Dry

EP 2 982 537 B1

# Fig. 4

(A)  $T_c$: 140[Nm]

(B)  $T_c$: 200[Nm]

Vehicle speed v
( —— )
Wheel speed rω
( ----- )

[m/s]
150
100
50
0

Slip ratio λ

1
0.8
0.6
0.4
0.2
0

Friction coefficient μ

1
0.8
0.6
0.4
0.2
0

Torque command value $T_c$
(= Torque setting value $T_s$)

[Nm]
800
600
400
200
0

$t_1$     $t_2$

Dry   Frozen   Dry

$t_1$     $t_2$

Dry   Frozen   Dry

EP 2 982 537 B1

Fig. 5

# Fig. 6

(A)

Driving Torque

True Value

$T_{d,T}$

$T_{d,LL}$

Error Range

$A = (T_{d,LL} / T_{d,T})$

0

Time

(B)

Slip ratio

Estimated Slip Ratio λ

$\lambda_{UL}$

$\lambda_T$

Error Range

True Value

$b = (\lambda_{UL} / \lambda_T)$

0

Time

# Fig. 7

810 Torque Command Value Generation Part — $T_c$

830 Error Estimation Part — a, b / $T_d$

710 Movement Speed Acquisition Part — v

720 Rotational Speed Acquisition Part — ω

730 Actual Torque Value Acquisition Part — $T_m$

741 Limiting Part — $T_L$

742 Feedback Part — $T_f$

$\dfrac{d\omega}{dt}$   k

740A Control Part

743A Torque Setting Value Calculation Part

751

$T_s$

900 Motor Drive System

EP 2 982 537 B1

37

# Fig. 8

EP 2 982 537 B1

Fig. 9

Driving Torque and Limit Value [Nm]

Dry

Wet

Frozen

Thin Lines:
  Driving Torque

Thick Lines:
  Limit Value

Slip Ratio λ

EP 2 982 537 B1

Fig. 10

(A) $T_c$ : 100[Nm]

(B) $T_c$ : 200[Nm]

Vehicle speed v
( ——— )
[m/s]
Wheel speed rω
( ------ )

Slip ratio

Friction coefficient

Calculated Limit Value L
( ——— )
[Nm]
Torque command value $T_c$
( ------ )

Est. Driving Torque Value $T_d$
( ——— )
[Nm]
Torque setting value $T_s$
( ——— )
[Nm]
Torque command value $T_c$
( ------ )

# Fig. 11

(A) $T_c$ : 300[Nm]　　　(B) $T_c$ : 500[Nm]　　　(C) $T_c$ : 700[Nm]

Vehicle speed v
( —— )
Wheel speed rω　　[m/s]
( ----- )

Slip ratio

Friction coefficient

Calculated Limit Value L
( —— )
Torque command value $T_c$
( ----- )　　[Nm]
Est. Driving Torque Value $T_d$
( ---- )

Torque setting value $T_s$
( —— )
　　[Nm]
Torque command value $T_c$
( ----- )

Dry　Frozen　Dry　　　Dry　Frozen　Dry　　　Dry　Frozen　Dry

EP 2 982 537 B1

# Fig. 12

(A) $T_d$: No Error    λ : No Error

(B) $T_d$: Error of -20%    λ : Error of +20%

(C) $T_d$: Error of +20%    λ : Error of -20%

Vehicle speed v ( —— ) [m/s]
Wheel speed rω ( ------ )

Slip ratio

Friction coefficient

Calculated Limit Value L ( —— )
Torque command value $T_c$ [Nm] ( ------ )
Est. Driving Torque Value $T_d$ ( ----- )

Torque setting value $T_s$ ( —— ) [Nm]
Torque command value $T_c$ ( ----- )

Dry  Frozen  Dry

EP 2 982 537 B1

# Fig. 13

(A) $T_d$: No Error  
λ : No Error

Driving Torque and Limit Value [Nm]

Dry  
Wet  
Frozen

Thin Lines: Driving Torque  
Thick Lines: Limit Value

Slip Ratio λ

(B) $T_d$: Error of -20%  
λ : Error of +20%

Driving Torque and Limit Value [Nm]

Dry  
Wet  
Frozen

Thin Lines: Driving Torque  
Thick Lines: Limit Value

Slip Ratio λ

(C) $T_d$: Error of +20%  
λ : Error of -20%

Driving Torque and Limit Value [Nm]

Dry  
Wet  
Frozen

Thin Lines: Driving Torque  
Thick Lines: Limit Value

Slip Ratio λ

# Fig. 14

(A) $T_d$: No Error
$\lambda$ : No Error

Driving Torque and Limit Value [Nm]

Slip Ratio $\lambda$

Dry
Wet
Frozen

Thin Lines:
Driving Torque
Thick Lines:
Limit Value

(B) $T_d$: Error of -20%
$\lambda$ : Error of +20%

Driving Torque and Limit Value [Nm]

Slip Ratio $\lambda$

Dry
Wet
Frozen

Thin Lines:
Driving Torque
Thick Lines:
Limit Value

(C) $T_d$: Error of +20%
$\lambda$ : Error of -20%

Driving Torque and Limit Value [Nm]

Slip Ratio $\lambda$

Dry
Wet
Frozen

Thin Lines:
Driving Torque
Thick Lines:
Limit Value

Fig. 15

# Fig. 16

(A)  $T_c$ : 100[Nm]        (B)  $T_c$ : 300[Nm]

Vehicle speed v
( —— )
Wheel speed rω        [m/s]
( ------ )

Slip ratio

Friction coefficient

Calculated Limit Value L
( —— )
Torque command value $T_c$      [Nm]
( ------ )
Est. Driving Torque Value $T_d$
( ----- )

Torque setting value $T_s$
( —— )
Torque command value $T_c$      [Nm]
( ------ )
Limited Torque Value $T_L$
( --- )

Dry — Frozen : Dry        Dry : Frozen — Dry

EP 2 982 537 B1

Fig. 17

(A) $T_c$ : 500[Nm]

(B) $T_c$ : 700[Nm]

Vehicle speed v
( —— )
Wheel speed rω
( ----- )

Slip ratio

Friction coefficient

Calculated Limit Value L
( —— )
Torque command value $T_c$
( ---- )
Est. Driving Torque Value $T_d$
( ---- )

Torque setting value $T_s$
( —— )
Torque command value $T_c$
( ----- )
Limited Torque Value $T_L$
( --- )

Dry : Frozen : Dry

Dry : Frozen : Dry

EP 2 982 537 B1

# Fig. 18

Vehicle speed v
( —— )
Wheel speed rω    [m/s]
( ----- )

Slip ratio

Friction coefficient

Calculated Limit Value L
( —— )
Torque command value T_c  [Nm]
( ----- )
Est. Driving Torque Value T_d
( --·-- )

Torque setting value T_s
( —— )
Torque command value T_c  [Nm]
( ----- )
Limited Torque Value T_L
( --·-- )

(A)  T_d: No Error
     λ : No Error

(B)  T_d: Error of -20%
     λ : Error of +20%

(C)  T_d: Error of +20%
     λ : Error of -20%

Dry  Frozen  Dry     Dry  Frozen  Dry     Dry  Frozen  Dry

EP 2 982 537 B1

Fig. 19

# Fig. 20

Fig. 21

Fig. 22

Moving Body MV

Traction Control Device 700B

900FL Motor Drive System
900RR Motor Drive System
820 Acceleration Detection Part

CTs,j
CTs,FL
ID,FL, θ FL
CTs,RR
ID,RR, θ RR
a

730 Actual Torque Value Acquisition Part — ID,j
720 Rotational Speed Acquisition Part — θ j
710 Movement Speed Acquisition Part

740B
Tm,j
ωj
v

Control Part

810 Torque Command Value Generation Part — Tc,j
830 Error Estimation Part — aj, bj — Td,j

(j=FL∼RR)

# Fig. 23

EP 2 982 537 B1

# Fig. 24

EP 2 982 537 B1

# Fig. 25

EP 2 982 537 B1

Fig. 26

EP 2 982 537 B1

# Fig. 27

```
                    ┌──────────────┐
                    │    Start     │
                    └──────┬───────┘
                           │
          ┌────────────────┤
          │                ▼                          S11
          │       ╱──────────────────╲
          │      ╱ Stop Command for    ╲      Y
          │      ╲ Traction Control     ╱──────────────┐
          │       ╲ Received ?         ╱               │
          │        ╲──────────────────╱                │
          │                │ N                         │
          │                ▼          S12              ▼           S18
          │      ┌──────────────────┐        ┌──────────────────┐
          │      │ Calculate Limit  │        │     Cancel       │
          │      │ Value for Each   │        │   Limitation     │
          │      │  Driving Wheel   │        └────────┬─────────┘
          │      └────────┬─────────┘                 │         S19
          │               ▼          S13              ▼
          │      ┌──────────────────┐        ┌──────────────────┐
          │      │ Calculate Limited│        │ Clear Feedback   │
          │      │ Torque Value for │        │  Torque Values   │
          │      │ Each Driving Wheel        └────────┬─────────┘
          │      └────────┬─────────┘                 │
          │               ▼          S14              ▼
          │      ┌──────────────────┐        ┌──────────────┐
          │      │ Calculate Feedback        │     End      │
          │      │  Torque Value for│        └──────────────┘
          │      │ Each Driving Wheel
          │      └────────┬─────────┘
          │               ▼          S15
          │      ┌──────────────────┐
          │      │ Calculate        │
          │      │ Individual Torque│
          │      │ Setting Value for│
          │      │ Each Driving Wheel
          │      └────────┬─────────┘
          │               ▼          S16
          │      ┌──────────────────┐
          │      │ Find Minimum     │
          │      │ Individual Torque│
          │      │ Setting Value    │
          │      └────────┬─────────┘
          │               ▼          S17
          │      ┌──────────────────┐
          │      │ Output Minimum   │
          │      │ Individual Torque│
          │      │ Setting Value as │
          │      │ Torque Setting   │
          │      │ Values for All   │
          │      │ Driving Wheels   │
          │      └────────┬─────────┘
          └───────────────┘
```

# Fig. 28

```
        ┌──────────────┐
        │    Start     │
        └──────┬───────┘
               │                          S12
               ▼
   ┌───────────────────────┐  S21
   │ Acquire Rotational     │
   │ speeds ωⱼ, Vehicle     │
   │ speed v, Actual        │
   │ Torque Values Tₘ,ⱼ, and│
   │ Estimated Error        │
   │ Ratios aⱼ, bⱼ          │
   └───────────┬───────────┘
               │
               ▼
   ┌───────────────────────┐  S22
   │ Calculate Slip Ratios λⱼ│
   └───────────┬───────────┘
               │
               ▼
   ┌───────────────────────┐  S23
   │ Calculate Driving      │
   │ Torques T_d,j          │
   └───────────┬───────────┘
               │
               ▼
   ┌───────────────────────┐  S24
   │ Calculate Limiter      │
   │ Coefficients kⱼ        │
   └───────────┬───────────┘
               │
               ▼
   ┌───────────────────────┐  S25
   │ Calculate Limit        │
   │ Values Lⱼ              │
   └───────────┬───────────┘
               │
               ▼
        ┌──────────────┐
        │    Return    │
        └──────────────┘
```

Acquire Rotational speeds $\omega_j$, Vehicle speed v, Actual Torque Values $T_{m,j}$, and Estimated Error Ratios $a_j$, $b_j$ — S21

Calculate Slip Ratios $\lambda_j$ — S22

Calculate Driving Torques $T_{d,j}$ — S23

Calculate Limiter Coefficients $k_j$ — S24

Calculate Limit Values $L_j$ — S25

# Fig. 29

```
                    ┌──────────────┐
                    │    Start     │
                    └──────┬───────┘
                           │
                           ▼
            ┌──────────────────────────────┐  S31
            │  Calculate Back-Calculated   │
            │    Torque Values T_{n,j}     │
            └──────────────┬───────────────┘
                           │
                           ▼
            ┌──────────────────────────────┐  S32
            │   Calculate Differential     │
            │    Torque Values T_{h,j}     │
            └──────────────┬───────────────┘
                           │
                           ▼
            ┌──────────────────────────────┐  S33
            │     Calculate Feedback       │
            │        Gains k_{p,j}         │
            └──────────────┬───────────────┘
                           │
                           ▼
            ┌──────────────────────────────┐  S34
            │     Calculate Feedback       │
            │    Torque Values T_{f,j}     │
            └──────────────┬───────────────┘
                           │
                           ▼
                    ┌──────────────┐
                    │    Return    │
                    └──────────────┘
```

S14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006034012 A
- JP 2008167624 A
- JP 2012186928 A
- US 2009210128 A1
- WO 2012111159 A1